# EUROPEAN PATENT APPLICATION

(11) **EP 4 734 578 A1**
(43) Date of publication of application: **29.04.2026**
(21) Application number: 24830186.3
(22) Date of filing: 10.05.2024
(51) Int. Cl.: H04W 12/30

(54) **SECURITY CONTROL METHOD, SECURE TRANSMISSION SYSTEM, AND MOBILE DEVICE**

(30) Priority: 25.06.2023 CN 202310745015; 25.06.2023 CN 202310752524
(71) Applicant: Beijing Geekplus Technology Co. Ltd, Beijing 100102 (CN)
(72) Inventor: LIU, Yunbo, Beijing 100102 (CN); DONG, Peijun, Beijing 100102 (CN); XIAO, Zhaofeng, Beijing 100102 (CN)
(74) Representative: Manna, Sara
(86) International application number: PCT/CN2024/092411
(87) International publication number: WO 2025/001538

(57) **Abstract**

The present invention relates to the technical field of warehouse logistics. Disclosed are a security control method, a security control system, and a movable device. The method is applied to a security control system. The security control system comprises a security control system and a movable device. The method comprises: when a network between the movable device and the security control system is disconnected, a security control mechanism in the movable device controls an actuating mechanism in the movable device to stop operation; and when the network between the movable device and the security control system is restored, if it is determined that an operation resumption condition is satisfied, the security control mechanism controls the actuating mechanism to resume operation, wherein satisfying the operation resumption condition comprises: a security control unit obtaining a reset signal and/or the duration from when the network is disconnected to when the network is restored is smaller than a first preset duration.

## Description

The present disclosure claims priorities to Chinese patent application No. 202310745015.X filed on June 25, 2023, and Chinese patent application No. 202310752524.5 filed on June 25, 2023, the entire contents of which are incorporated by reference into the present disclosure.

### TECHNICAL FIELD

The present disclosure relates to the field of warehousing logistics technologies, and particularly to a security control method, a security transmission system and a movable device.

### BACKGROUND

As development of movable device technology, movable devices are increased to be used in freight, warehousing, logistics, catering and other industrial services, greatly facilitating human production and life.

In a working scenario of a movable device, a corresponding control signal is generally transmitted to the movable device via a control platform, to enable the movable device to perform a corresponding operation according to the control signal, realizing the control of the movable device. However, if there are security risks in a transmission process of the control signal between the control platform and the movable device, such as the control signal is tampered with, the control platform cannot effectively manage the movable device via the control signal, which may cause a risk of the movable device losing control. Therefore, a security control system is needed to realize a safe transmission of the control signal to the movable device.

### SUMMARY

Embodiments of the present disclosure provide a security control method, a security transmission system and a movable device.

According to a first aspect of embodiments of the present disclosure, a security control method is provided. The method is applied to a security transmission system including a movable device and a security control system, and includes: first, when a network between the movable device and the security control system is disconnected, stopping operation of an actuating mechanism in the movable device under control of a security control mechanism in the movable device; then when the network between the movable device and the security control system is restored, resuming the operation of the actuating mechanism under the control of the security control mechanism in response to determining that a resuming operation condition is satisfied, in which satisfying the resuming operation condition includes the security control mechanism acquiring a reset signal and/or a duration from the network being disconnected to the network being restored being less than a first preset duration.

According to a second aspect of embodiments of the present disclosure, a security transmission system is provided. The system includes a security control system and a movable device. The movable device includes a security control mechanism and an actuating mechanism, and the security control mechanism is configured to: when a network between the movable device and the security control system is disconnected, control the actuating mechanism to stop operation; and when the network between the movable device and the security control system is restored, control the actuating mechanism to resume the operation in response to determining that a resuming operation condition is satisfied, in which satisfying the resuming operation condition includes the security control mechanism acquiring a reset signal and/or a duration from the network being disconnected to the network being restored being less than a first preset duration.

According to a third aspect of embodiments of the present disclosure, a movable device is provided. The movable device includes a security control mechanism and an actuating mechanism, and the security control mechanism is configured to: when a network between the movable device and the security control system is disconnected, control the actuating mechanism to stop operation; and when the network between the movable device and the security control system is restored, control the actuating mechanism to resume the operation in response to determining that a resuming operation condition is satisfied, in which satisfying the resuming operation condition includes the security control mechanism acquiring a reset signal and/or a duration from the network being disconnected to the network being restored being less than a first preset duration.

According to a fourth aspect of embodiments of the present disclosure, a computing device is provided. The computing device includes: a memory, a processor and computer instructions stored on the memory and capable of being running on the processor. The processor is configured to execute the computer instructions to implement steps of the security control method described in the first aspect.

According to a fifth aspect of embodiments of the present disclosure, a computer-readable storage medium having computer instructions stored thereon is provided. When the computer instructions are executed by a processor, steps of the security control method described in the first aspect are implemented.

According to a sixth aspect of embodiments of the present disclosure, a computer program product is provided. The computer program product includes a computer program stored on a non-transitory computer-readable storage medium, and the computer program includes program instructions which, when executed by a computer, cause the computer to implement the steps of the security control method described in the first aspect.

According to a seventh aspect of embodiments of the present disclosure, a computer program is provided. When the computer program is executed by a processor, steps of the security control method described in the first aspect may be implemented.

### BRIEF DESCRIPTION OF THE DRAWINGS

FIG. 1 is a schematic diagram illustrating an interaction scenario between a control platform and a movable device provided by an embodiment of the present disclosure.
FIG. 2 is a schematic diagram illustrating another interaction scenario between a control platform and a movable device provided in an embodiment of the present disclosure.
FIG. 3 is a schematic diagram illustrating a security control method provided by an embodiment of the present disclosure.
FIG. 4 is a schematic diagram illustrating a security transmission system provided by an embodiment of the present disclosure.
FIG. 5 is a schematic diagram illustrating an interaction scenario between a security control system and a movable device provided by an embodiment of the present disclosure.
FIG. 6 is a schematic diagram illustrating another security control method provided by an embodiment of the present disclosure.
FIG. 7 is a schematic diagram illustrating a signal timing sequence provided by an embodiment of the present disclosure.
FIG. 8 is a schematic diagram illustrating another signal timing sequence provided by an embodiment of the present disclosure.
FIG. 9 is a schematic diagram illustrating yet another security control method provided by an embodiment of the present disclosure.
FIG. 10 is a schematic diagram illustrating yet another signal timing sequence provided by an embodiment of the present disclosure.
FIG. 11 is a schematic diagram illustrating a movable device provided by an embodiment of the present disclosure.
FIG. 12 is a schematic diagram illustrating another security transmission system provided by an embodiment of the present disclosure.
FIG. 13 is a schematic diagram illustrating yet another interaction scenario between a control platform and a movable device provided in an embodiment of the present disclosure.
FIG. 14 is a schematic diagram illustrating yet another security transmission system provided by an embodiment of the present disclosure.
FIG. 15 is a schematic diagram illustrating still another security transmission system provided by an embodiment of the present disclosure.
FIG. 16 is a schematic diagram illustrating still another security transmission system provided by an embodiment of the present disclosure.
FIG. 17 is a schematic diagram illustrating still another security transmission system provided by an embodiment of the present disclosure.
FIG. 18 is a schematic diagram illustrating still another security transmission system provided by an embodiment of the present disclosure.
FIG. 19 is a schematic diagram illustrating still another security transmission system provided by an embodiment of the present disclosure.
FIG. 20 is a schematic diagram illustrating still another security transmission system provided by an embodiment of the present disclosure.
FIG. 21 is a schematic diagram illustrating still another security transmission system provided by an embodiment of the present disclosure.
FIG. 22 is a schematic diagram illustrating still another security transmission system provided by an embodiment of the present disclosure.
FIG. 23 is a schematic diagram illustrating still another security transmission system provided by an embodiment of the present disclosure.
FIG. 24 is a schematic diagram illustrating still another security transmission system provided by an embodiment of the present disclosure.
FIG. 25 is a schematic diagram illustrating still another security transmission system provided by an embodiment of the present disclosure.
FIG. 26 is a schematic diagram illustrating a security control scenario provided by an embodiment of the present disclosure.
FIG. 27 is a schematic diagram illustrating an interaction between security control units provided by an embodiment of the present disclosure.
FIG. 28 is a schematic diagram illustrating another security control scenario provided by an embodiment of the present disclosure.
FIG. 29 is a schematic diagram illustrating yet another security control method provided by an embodiment of the present disclosure.
FIG. 30 is a schematic diagram illustrating an electronic device provided in some embodiments of the present disclosure.

### DETAILED DESCRIPTION

In order to enable those skilled in the art to better understand the technical solution in embodiments of the present disclosure and to make the above-mentioned purposes, features and advantages of the embodiments of the present disclosure more obvious and understandable, the technical solution in the embodiments of the present disclosure are further described in detail below with reference to the accompanying drawings.

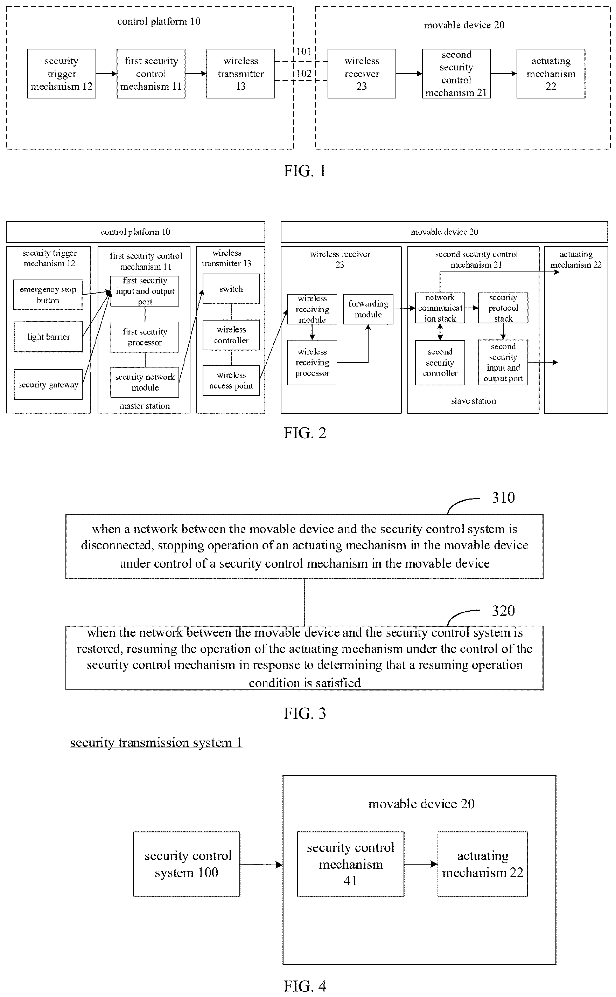

FIG. 1 is a schematic diagram illustrating an interaction scenario between a control platform and a movable device provided by an embodiment of the present disclosure. As illustrated in FIG. 1, a control platform 10 may send control instructions to a movable device 20 via at least two communication links (such as a first communication link 101 and a second communication link 102) to control operation of the movable device 20.

In some examples, the movable device 20 may be an automated guided vehicle (AGV), a robot, or other equipment, which is not limited in the embodiments of the present disclosure. The embodiments of the present disclosure may be schematically illustrated using the AGV as an example.

In some examples, the control platform 10 refers to a platform that may control the movable device 20. For example, in a warehouse management scenario, a warehouse may include a plurality of AGVs and a control platform 10 for managing and controlling the plurality of AGVs. The control platform 10 may achieve control over the movable devices such as scheduling, operation, emergency stop and resumption of operation by controlling the movable device 20.

In some embodiments, the control platform 10 may generate an emergency stop signal when determining that an emergency stop event is triggered, and transmit the emergency stop signal to the movable device 20 via the first communication link 101. The emergency stop signal is an instruction that complies with a preset security communication protocol, and the first communication link 101 is a link that complies with the preset security communication protocol. The movable device 20 may receive the emergency stop signal via the first communication link 101, parse the emergency stop signal using the preset security communication protocol, and perform a shutdown operation based on a parsing result.

Since the first communication link 101 for transmitting the emergency stop signal between the control platform 10 and the movable device 20 complies with the preset security communication protocol, and the emergency stop signal also complies with the preset security communication protocol, the emergency stop signal that complies with the preset security communication protocol may be protected when transmitted via the first communication link 101, thus achieving security transmission between the control platform 10 and the movable device 20.

In some examples, the control platform 10 may further include system software for generating a scheduling instruction, for example, the scheduling instruction may be sent to the movable device 20 via the second communication link 102. The second communication link 102 may be a link that does not need to comply with the preset security communication protocol.

In some embodiments, as shown in FIG. 1, the control platform 10 may include a first security control mechanism 11, a security trigger mechanism 12 and a transmitter, such as a wireless transmitter 13. The first security control mechanism 11 is coupled to the security trigger mechanism 12 and the wireless transmitter 13 respectively.

In some examples, as shown in FIG. 2, the first security control mechanism 11 may include a first security input and output port, a first security processor and a security network module. The first security processor may be a central processing unit (CPU).

In some examples, the security trigger mechanism 12 may include at least one of an emergency stop button, a light barrier, and a security gateway, and at least one of the emergency stop button, the light barrier, and the security gateway is coupled to the first security input and output port.

For example, when the security trigger mechanism 12 detects a trigger operation, a security trigger signal may be generated. When the first security control mechanism 11 receives the security trigger signal, it may determine that the emergency stop event is triggered according to the security trigger signal and the emergency stop signal is generated.

For example, when the emergency stop button is pressed, or the light barrier is blocked, or the security gateway is turned off, and other trigger operations are performed, a corresponding security trigger signal may be generated. When the first security control mechanism 11 receives the security trigger signal, the emergency stop signal that complies with the preset security communication protocol may be generated.

Illustratively, the wireless transmitter 13 may send the emergency stop signal and/or the scheduling instruction to the movable device 20, so that the movable device 20 stops or moves according to the emergency stop signal or the scheduling instruction.

In some examples, as shown in FIG. 2, the wireless transmitter 13 includes a switch, a wireless controller and a wireless access point. The switch may be coupled to a security network module, and configured to acquire the emergency stop signal generated by the first security control mechanism 11, and after being processed by the wireless controller, the processed emergency stop signal is sent to the movable device 20 via the wireless access point.

In some embodiments, as shown in FIG. 2, the movable device 20 includes a second security control mechanism 21, an actuating mechanism 22, and a wireless receiver 23. The second security control mechanism 21 is coupled to the actuating mechanism 22 and the wireless receiver 23, respectively.

In some examples, the wireless receiver 23 includes a wireless receiving module, a wireless receiving processor, and a forwarding module. The wireless receiving module may be coupled to the wireless access point, and configured to receive a wireless signal sent by the control platform 10 and forward the wireless signal to the wireless receiving processor. For example, the wireless receiving module may forward the received wireless signal by means of a high-speed serial computer expansion bus standard (peripheral component interconnect express, PCIE) bus. The wireless receiving processor transparently transmits the received wireless signal to the forwarding module, and the received wireless signal may be processed by the forwarding module. The forwarding module converts the received wireless signal and outputs the wireless signal after being converted into an Ethernet port format.

Illustratively, the second security control mechanism 21 parses the received emergency stop signal using the preset security communication protocol to obtain a parsing result, and sends the parsing result to the actuating mechanism 22. The actuating mechanism 22 executes a stop operation (e.g., shutdown) based on the parsing result.

In some examples, as shown in FIG. 2, the second security control mechanism 21 includes a network communication stack, a security protocol stack, a second security controller, and a second security input and output port. The network communication stack is configured to receive a control instruction, filter and identify the received control instruction, and determine that the control instruction is the emergency stop signal when the control instruction is identified as a security instruction received from the first communication link 101, and forward the emergency stop signal to the security protocol stack. The security protocol stack parses the emergency stop signal that complies with the preset security communication protocol through the preset security communication protocol to obtain the parsing result, and safely outputs the parsing result to the actuating mechanism 22 in a form of input and output quantity through the second security input and output port.

In some examples, as shown in FIG. 2, the first security control mechanism 11 may be referred to as a master station, and the second security control mechanism 21 may be referred to as a slave station.

In some examples, a transmission process between the control platform 10 and the movable device 20 is based on a situation where a network (such as a wireless network) between the control platform 10 and the movable device 20 is in normal connection. For example, as shown in FIG. 2, in a case where each component in the wireless transmitter 13 and the wireless receiver 23 is in normal operation, it may be considered that the network between the control platform 10 and the movable device 20 is normal, and in this case, the above transmission process may be completed between the control platform 10 and the movable device 20.

However, when any one component of the wireless transmitter 13 or the wireless receiver 23 occurs a fault, the network between the control platform 10 and the movable device 20 being disconnected (or a network fault) may be caused. When the network is disconnected, the movable device 20 cannot normally receive the relevant control instructions sent by the control platform 10, and the movable device 20 stops running. In the related art, when the network between the control platform 10 and the movable device 20 is restored, the movable device 20 cannot automatically resume to an original operation status, but still remains in a stopping status, that is, the movable device cannot continue to perform related operations after the network is restored.

In some examples, when the network between the control platform 10 and the movable device 20 is disconnected and then restored, the movable device 20 may be controlled to resume operation through manual intervention. For example, when the network is restored, the operation of the movable device 20 may be resumed by manually controlling the movable device 20 to power off and restart. However, the operation using the manual intervention is relatively cumbersome, and a time of restarting the movable device 20 needs to be manually controlled. If the movable device 20 is not restarted in time after the network is restored, the movable device 20 cannot resume operation immediately after the network is restored, thereby reducing a working efficiency of the movable device 20.

In order to solve the above problem, an embodiment of the present disclosure provides a security control method. Under the premise of ensuring security transmission of the movable device 20, the security control method may solve a problem that the movable device 20 cannot automatically resume operation after the network between the control platform 10 and the movable device 20 is disconnected and restored, and the working efficiency of the movable device 20 may be improved.

The security control method provided by the embodiments of the present disclosure is described below in combination with the accompanying drawings.

FIG. 3 is a schematic diagram illustrating a security control method provided by an embodiment of the present disclosure. As shown in FIG. 3, the security control method includes steps 310 to 320 below.

At step 310, when a network between the movable device and the security control system is disconnected, operation of an actuating mechanism in the movable device is stopped under control of a security control mechanism in the movable device.

FIG. 4 is a schematic diagram illustrating a security control system provided in some embodiments of the present disclosure. In some embodiments. As shown in FIG. 4, the security control system 1 includes a movable device 20 and a security control system 100. The movable device 20 includes a security control mechanism 41 and an actuating mechanism 22 coupled to the security control mechanism 41.

It should be noted that the security control mechanism 41 may be the second security control mechanism 21 in the above embodiment (such as FIG. 1 and FIG. 2).

In some examples, the security control system 100 may be the control platform 10 in the above embodiments (such as FIG. 1 and FIG. 2). For example, the security control system 100 may include a first security control mechanism 11, a security trigger mechanism 12, and a wireless transmitter 13. In other examples, the security control system 100 may also include the first security control mechanism 11 and the wireless transmitter 13 in the control platform 10, which are coupled with the security trigger mechanism 12. Details are not limited in the embodiments of the present disclosure. It should be noted that the embodiments of the present disclosure are schematically described by taking the security control system 100 as the control platform 10 in the above embodiments as an example.

In some embodiments, stopping the operation of the actuating mechanism 22 in the movable device 41 under the control of the security control mechanism 41 in the movable device 41 includes: outputting, by the security control mechanism 41, a stop operation instruction to the actuating mechanism 22; and stopping the operation of the actuating mechanism 22 according to the stop operation instruction.

The stop operation instruction is configured to instruct the actuating mechanism 22 to stop operating.

Illustratively, the security output of the security control mechanism 41 corresponding to the stop operation instruction is at a second level. For example, when the network between the security control system 100 and the movable device 20 is disconnected, the security output (signal) of the security control mechanism 41 (such as a slave station) changes to the second level, and the operation of the actuating mechanism 22 stops in response to the second level output by the security control mechanism 41.

In some examples, the second level may be a low level, or the second level may be a high level, which is not limited in embodiments of the present disclosure. It should be noted that the embodiments of the present disclosure are schematically illustrated by taking the second level as the low level as an example. That is, when the network between the security control system 100 and the movable device 20 is disconnected, the security output of the security control mechanism 41 changes from the original high level to the low level, and in response to the security output of the security control mechanism 41 changing to the low level, the operation of the actuating mechanism 22 stops.

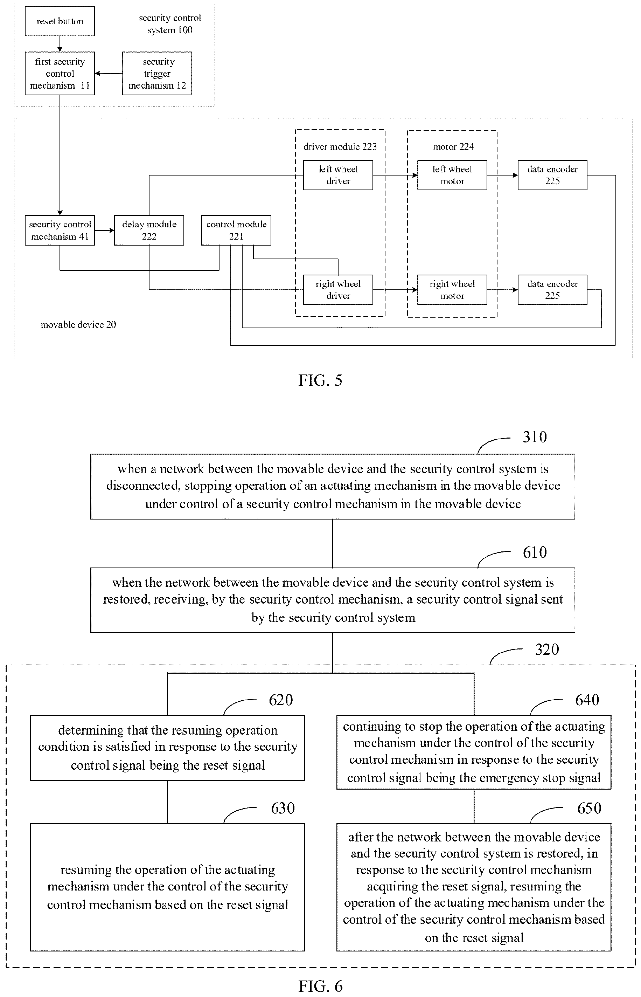

FIG. 5 is a schematic diagram illustrating an interactive scenario between a security control system and a movable device provided by some embodiments of the present disclosure. In some embodiments, as shown in FIG. 5, the actuating mechanism 22 includes a control module 221, a delay module 222, a driver module 223 and a motor 224.

In some examples, the control module 221 and the delay module 222 are coupled to the security control mechanism 41 to receive the control instruction sent by the security control mechanism 41. The control module 221 and the delay module 222 are also coupled to the driver module 223, and the driver module 223 is coupled to the motor 224.

In some embodiments, stopping the operation of the actuating mechanism 22 according to the stop operation instruction includes: outputting, by the control module 221, a deceleration instruction to the driver module 223 according to the stop operation instruction output by the security control mechanism 41; driving, by the driver module 223, the motor 224 to decelerate according to the deceleration instruction; starting timing of the delay module 222 according to the stop operation instruction output by the security control mechanism 41; in a case where a timing duration of the delay module 222 reaches a second preset duration, outputting, by the delay module 222, a power-off instruction to the driver module 223, in which the first preset duration is less than or equal to the second preset duration; driving, by the driver module 223, the motor 224 to power off and brake and outputting fault information according to the power-off instruction.

Illustratively, when the security output of the security control mechanism 41 is at the low level and outputs the stop operation instruction, the security output of the control module 221 changes the low level in response to the stop operation instruction, and the control module 221 outputs the deceleration instruction. The driver module 223 receives the deceleration instruction and drives the motor 224 to decelerate according to the deceleration instruction, until the motor 224 stops.

Illustratively, when the security output of the security control mechanism 41 is at the low level and outputs the stop operation instruction, the delay module 222 starts delay timing in response to the stop operation instruction and. When the timing duration reaches the second preset duration, the security output of the delay module 222 changes to the low level and outputs the power-off instruction. The driver module 223 receives the power-off instruction, outputs the fault information according to the power-off instruction, and drives the motor 224 to power off and brake.

In some examples, the second preset duration is a duration preset in the delay module 222, and the second preset duration may be set as required. For example, the second preset duration is 6 seconds, that is, when the timing duration of the delay module 222 reaches 6 seconds, the timing ends. At this time, the security output of the delay module 222 changes to the low level, and the delay module 222 outputs the power-off instruction. It should be noted that the second preset duration may also be other durations (such as greater than 6 seconds or less than 6 seconds), which is not limited in the embodiments of the present disclosure.

In some examples, the motor 224 may be driven to power off and brake when a speed of the motor 224 drops to 0. That is, the second preset duration may be set to be greater than or equal to a duration from when the motor 224 runs to when the speed drops to 0. For example, the duration from when the motor 224 runs to when the speed drops to 0 may be predetermined, and the second preset duration may be determined based on the duration. Alternatively, the second preset duration may also be determined in other ways, which is not limited in the embodiments of the present disclosure.

In some examples, the fault information output by the driver module 223 may be a fault code, which is configured to indicate that the driver module 223 is in a fault status, and the driver module 223 may resume normal operation only after the fault code is cleared. For example, the fault code may be a hexadecimal fault code (such as 0x4000).

In some examples, as shown in FIG. 5, the driver module 223 may include a left wheel driver and a right wheel driver, and the motor 224 may include a left wheel motor and a right wheel motor. The left wheel driver may be coupled to the left wheel motor, and the right wheel driver may be coupled to the right wheel motor.

That is, when the control module 221 outputs the deceleration instruction, the left wheel driver may drive the left wheel motor to decelerate in response to the deceleration instruction, and the right wheel driver may drive the right wheel motor to decelerate in response to the deceleration instruction. When the timing duration of the delay module 222 reaches the second preset duration and outputs the power-off instruction, the left wheel driver outputs a first fault message in response to the power-off instruction, and drives the left wheel motor to power-off and brake; the right wheel driver outputs a second fault message in response to the power-off instruction, and drives the right wheel motor to power-off and brake. The first fault message may be the same as or different from the second fault message.

In some examples, as shown in FIG. 5, the actuating mechanism 22 further includes at least one data encoder 225. The data encoder 225 is configured to obtain a current rotation speed of the motor 224 in real time, and send the obtained rotation speed to the security control mechanism 41. The security control mechanism 41 monitors the rotation speed of the motor 224 to determine whether the motor 224 is in an operation status or a stopping status. For example, the security control mechanism 41 may determine whether the motor 224 is abnormal based on the rotation speed of the motor 224. When it is determined that the motor 224 is abnormal, the driver module 223 may also drive the motor 224 to power-off and brake.

For example, the actuating mechanism 22 may include two data encoders 225. One data encoder 225 is coupled to the left wheel motor to obtain a rotation speed of the left wheel motor, and the other data encoder 225 is coupled to the right wheel motor to obtain a rotation speed of the right wheel motor, which is not limited in the embodiments of the present disclosure.

At step 320, when the network between the movable device and the security control system is restored, the operation of the actuating mechanism is resumed under the control of the security control mechanism in response to determining that a resuming operation condition is satisfied.

In some embodiments, satisfying the resuming operation condition includes the security control mechanism 41 acquiring a reset signal and/or a duration from the network being disconnected to the network being restored being less than a first preset duration. The first preset time is less than or equal to a second preset time.

In some examples, when the network between the movable device 20 and the security control system 100 is restored, the security control mechanism 41 may determine whether the actuating mechanism 22 satisfies the resuming operation condition based on the currently received relevant signal or information. For example, when the security control mechanism 41 determines that the reset signal is obtained, it may be determined that the actuating mechanism 22 satisfies the resuming operation condition, and the actuating mechanism 22 may be controlled to resume operation, and/or, when the security control mechanism 41 determines that the duration from the network being disconnected to the network being restored is less than the first preset time, it may be determined that the actuating mechanism 22 satisfies the resuming operation condition, and the actuating mechanism 22 may be controlled to resume operation.

For example, the first preset time duration may be an upper limit of the duration from the network being disconnected to the network being restored. When the duration from the network being disconnected to the network being restored is less than the first preset duration, the security control mechanism 41 may control the actuating mechanism 22 to resume operation. When the duration from the network being disconnected to the network being restored is greater than or equal to the first preset duration, the security control mechanism 41 may control the actuating mechanism 22 to resume operation only when the reset signal is received.

For example, the first preset duration may be less than or equal to the second preset duration, that is, when the duration from the network being disconnected to the network being restored is less than or equal to the second preset duration in the delay module, the security control mechanism 41 may control the actuating mechanism 22 to resume operation. The embodiments of the present disclosure do not specifically limit the first preset duration and the second preset duration, and the embodiment of the present disclosure takes an example that the first preset duration is equal to the second preset duration for illustrative description.

FIG. 6 is a schematic diagram illustrating another security control method provided by an embodiment of the present disclosure. When satisfying the resuming operation condition includes the security control mechanism 41 acquiring the reset signal, as shown in FIG. 6, after the above step 310 and before step 320, the method further includes step 610, and the above step 320 includes steps 620 to 650.

At step 610, when the network between the movable device and the security control system is restored, the security control mechanism acquires a security control signal sent by the security control system.

In some embodiments, the security control signal includes an emergency stop signal and/or the reset signal. The security control signal corresponds to a security event. When the security control system 100 (such as the control platform 10) confirms that the security event is triggered, the security control signal may be sent to the movable device 20. For example, the security event includes an emergency stop event and a reset event. The security event being triggered includes the emergency stop event being triggered or the reset event being triggered. When the emergency stop event is triggered, the security control system 100 (such as the control platform 10) may send the emergency stop signal to the movable device 20, and when the reset event is triggered, the security control system 100 (such as the control platform 10) may send the reset signal to the movable device 20.

Illustratively, if the security control mechanism 41 receives the emergency stop signal sent by the security control system 100 when the network between the movable device 20 and the security control system 100 is restored, it is determined that the emergency stop event is triggered.

In some examples, the emergency stop event may be triggered by the security trigger mechanism 12 in the security control system 100 (such as the control platform 10). For example, when the first security control mechanism 11 detects a triggering operation such as an emergency stop button being pressed, a light barrier being blocked, or a security gateway being turned off, the corresponding emergency stop signal may be generated. The first security control mechanism 11 sends the generated emergency stop signal to the security control mechanism 41 in the movable device 20. The security control mechanism 41 receives the emergency stop signal when the network is restored, and determines that the emergency stop event is triggered according to the emergency stop signal.

In other examples, if the first security control mechanism 11 generates the emergency stop signal before the network is disconnected, the security control mechanism 41 may receive the emergency stop signal and determine that the emergency stop event is triggered according to the emergency stop signal. In addition, if the security control mechanism 41 receives no reset signal sent by the first security control mechanism 11 during the duration from the network being disconnected to the network being restored, the security control mechanism 41 determines that the emergency stop event is triggered when the network is restored.

Illustratively, if the security control mechanism 41 receives no emergency stop signal sent by the security control system 100 when the network between the movable device 20 and the security control system 100 is restored, it is determined that the emergency stop event is not triggered.

In some examples, if the first security control mechanism 11 does not detect that the emergency stop button is pressed, the light barrier is not blocked, and the security gateway is not turned off, it indicates that the emergency stop event is not triggered. Therefore, the first security control mechanism 11 does not generate the emergency stop signal. When the network is restored, the security control mechanism 41 receives no emergency stop signal sent by the first security control mechanism 11. Therefore, when the network is restored, the security control mechanism 41 determines that the emergency stop event is not triggered.

Illustratively, if the security control mechanism 41 acquires the reset signal sent by the security control system 100 when the network between the movable device 20 and the security control system 100 is restored, it is determined that the reset event is triggered.

For example, the security control system 100 detects that the reset event is triggered during the period from the network being disconnected to the network being restored, and generates the reset signal. Since the network is in a disconnected status, the security control mechanism 41 cannot receive the reset signal. When the network is restored, the security control mechanism 41 may receive the reset signal, and then determine that the reset event has been triggered.

**In** some examples, as shown in FIG. 5, the reset event may be triggered by a reset button in the security control system 100 (such as the control platform 10). For example, when the first security control mechanism 11 detects that the reset button is pressed, the reset signal may be generated. The first security control mechanism 11 sends the reset signal to the security control mechanism 41 in the movable device 20. When the network is restored, the security control mechanism 41 receives the reset signal and determines that the reset event is triggered based on the reset signal. It should be noted that the reset event may also be triggered in other ways, which is not limited in the present disclosure.

Illustratively, the emergency stop event corresponding to the reset event, or the most recent emergency stop event before the reset event may be triggered before the network is disconnected, or may be triggered during the period from the network being disconnected to the network being restored (such as before the reset event is triggered).

For example, before the network is disconnected, the emergency stop event is triggered. During the period from the network being disconnected to the network being restored, if the reset event is triggered, the security control mechanism 41 may determine that the reset event has been triggered according to the reset signal sent by the security control system 100 when the network is restored. For another example, during the period from the network being disconnected to the network being restored, the reset event is triggered after the emergency stop event is triggered, the security control mechanism 41 may determine that the reset event has been triggered according to the reset signal sent by the security control system 100 when the network is restored.

At step 620, it is determined that the resuming operation condition is satisfied in response to the security control signal being the reset signal.

Illustratively, the reset signal may be a reset signal sent by the security control system 100, or the reset signal 30 may be a reset signal generated by the security control mechanism 41.

In some examples, when the reset signal is the reset signal sent by the security control system 100, the reset signal is a reset signal generated by the security control system 100 in the above embodiment when the reset event is triggered and sent to the security control mechanism 41.

In other examples, when the reset signal 30 is the reset signal generated by the security control mechanism 41, the security control mechanism 41 may generate the reset signal according to a change of the emergency stop signal. For example, the security control mechanism 41 may generate the reset signal according to recovery of the emergency stop signal (such as the emergency stop signal changes from a low level to a high level). In this case, the reset signal does not depend on the security control system 100, and only needs to be determined based on a rising edge of the emergency stop signal, thereby avoiding a situation where the security control mechanism 41 cannot normally receive the reset signal sent by the security control system 100.

For example, when the reset signal 30 is the reset signal generated by the security control mechanism 41, the security control mechanism 41 may generate the reset signal after the network is restored.

It should be noted that, regardless of whether the reset signal is the reset signal sent by the security control system 100 or the reset signal generated by the security control mechanism 41, the security control mechanism 41 may control the actuating mechanism to resume operation based on the reset signal. The following embodiments are schematically described by taking the reset signal as the reset signal sent by the security control system 100 as an example.

At step 630, the operation of the actuating mechanism is resumed under the control of the security control mechanism based on the reset signal.

In some examples, when the network between the movable device 20 and the security control system 100 is restored, if the security control mechanism 41 receives the reset signal sent by the first security control mechanism 11, the security control mechanism 41 may determine that the reset event is triggered, and therefore, may determine that the actuating mechanism 22 satisfies the resuming operation condition, and controls the actuating mechanism 22 to resume operation.

For example, after the network is disconnected, if the first security control mechanism 11 detects that the emergency stop event is triggered, the emergency stop signal is generated. Before the network is restored, the first security control mechanism 11 detects that the reset event is triggered and generates the reset signal. Due to the network being disconnected, the security control mechanism 41 cannot receive the emergency stop signal and the reset signal sent by the first security control mechanism 11. When the network is restored, the security control mechanism 41 may receive the reset signal sent by the first security control mechanism 11, and determine that the reset event is triggered according to the reset signal.

It should be noted that if the first security control mechanism 11 generates both the emergency stop signal and the reset signal during the period from the network being disconnected to the network being restored, when the network is restored, the security control mechanism 41 may only receive the instruction output later by the first security control mechanism 11, or the security control mechanism 41 may perform related operations only in response to the instruction output later by the first security control mechanism 11. For example, during the period from the network being disconnected to the network being restored, the first security control mechanism 11 first generates the emergency stop signal and then generates the reset signal, when the network is restored, the security control mechanism 41 may only receive the reset signal or only respond to the reset signal, and determine that the reset event is triggered.

**In** some examples, the security control mechanism 41 may also receive all instructions generated by the first security control mechanism 11 when the network is restored. For example, the security control mechanism 41 may receive relevant instructions according to a time at which the instruction is generated by the first security control mechanism 11. For example, if the first security control mechanism 11 generates the emergency stop signal first and then generates the reset signal, the security control mechanism 41 may first receive the emergency stop signal and then receive the reset signal when the network is restored, and determine that the reset event is triggered in response to the reset signal received later.

For example, before the network is disconnected, if the first security control mechanism 11 detects that the emergency stop event is triggered and generates the emergency stop signal, since the network is normal, the security control mechanism 41 may receive the emergency stop signal and determine that the emergency stop event is triggered based on the emergency stop signal. After the network is disconnected and before the network is restored, if the first security control mechanism 11 detects that the reset event is triggered and generates the reset signal, the security control mechanism 41 receives the reset signal when the network is restored and determines that the reset event is triggered based on the reset signal.

In some embodiments, resuming the operation of the actuating mechanism 22 under the control of the security control mechanism 41 based on the reset signal includes: outputting, by the security control mechanism 41, a first level based on the received reset signal, and outputting the operation resumption instruction to the actuating mechanism 22. The actuating mechanism 22 resumes operation according to the operation resumption instruction.

The operation resumption instruction is configured to instruct the actuating mechanism 22 to resume operation.

Illustratively, a security output of the security control mechanism 41 corresponding to the operation resumption instruction is at a first level. For example, when the network between the security control system 100 and the movable device 20 is restored, the security output (signal) of the security control mechanism 41 (such as a slave station) changes to the first level, and the actuating mechanism 22 resumes operation in response to the first level output by the security control mechanism 41.

In some examples, when the network is restored, if it is determined that the emergency stop event is not triggered or the reset event is triggered, the security output of the security control mechanism 41 changes to the first level. Since the actuating mechanism 22 is coupled to the security control mechanism 41, when the security output of the security control mechanism 41 changes to the first level, the actuating mechanism 22 may resume operation in response to the first level.

Illustratively, the first level is different from the second level. For example, when the second level is the low level, the first level may be the high level; when the second level is the high level, the first level may be the low level. It should be noted that the embodiment of the present disclosure is schematically illustrated by taking the first level as the high level and the second level as the low level as an example. That is, when the network between the security control system 100 and the movable device 20 is restored, the security output of the security control mechanism 41 is restored from the low level to the high level. In response to the security output of the security control mechanism 41 changing to the high level, the security control mechanism 41 outputs the operation resumption instruction to the actuating mechanism 22, and the actuating mechanism 22 resumes operation according to the operation resumption instruction.

In some embodiments, resuming the operation of the actuating mechanism 22 according to the operation resumption instruction included: outputting, by the control module 221, a power-on instruction to the driver module 223 according to the operation resumption instruction output by the security control mechanism 41; clearing the fault information and driving the motor 224 to power on and resume operation, by the driver module 223, according to the power-on instruction.

In some examples, when the security output of the security control mechanism 41 returns to the high level and the security control mechanism 41 outputs the operation resumption instruction, the security output of the control module 221 changes to the high level in response to the operation resumption instruction, and the control module 221 outputs the power-on instruction to the driver module 223. The driver module 223 receives the power-on instruction, clears the fault information generated by itself according to the power-on instruction, and drives the motor 224 to power on.

When the security output of the security control mechanism 41 is at a high level and the security control mechanism 41 outputs the operation resumption instruction, the security output of the delay module 222 changes to the high level in response to the operation resumption instruction, and the delay module 222 outputs an acceleration instruction to the driver module 223. The driver module 223 receives the acceleration instruction, and after the motor 224 is powered on, drives the motor 224 to accelerate according to the acceleration instruction, until the motor 224 resumes operation. For example, the driver module 223 may drive the motor 224 to resume an operating speed before the network is disconnected, which is not limited in the present disclosure.

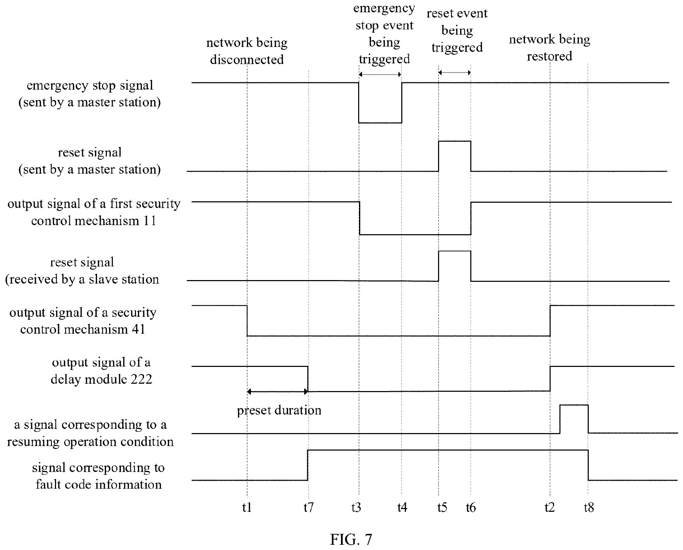

FIG. 7 is a schematic diagram illustrating a signal timing sequence provided by some embodiments of the present disclosure. As shown in FIG. 7, a time point t1 is a time point when the network between the security control system 100 and the movable device 20 is disconnected, and a time point t2 is a time point when the network between the security control system 100 and the movable device 20 is restored. An interval between a time point t3 and a time point t4 is a time interval when the emergency stop event is triggered. An interval between a time point t5 and a time point t6 is a time interval when the reset event is triggered.

As shown in FIG. 7, the network is disconnected at the time point t1, and the output signal of the first security control mechanism 11 does not change, and maintains a security output with the high level. The output signal of the security control mechanism 41 changes from the high level to the low level in response to the network being disconnected at the time point t1. When the output of the security control mechanism 41 changes to the low level, the security control mechanism 41 outputs the stop operation instruction, and the control module 221 outputs the deceleration instruction to the driver module 223 according to the stop operation instruction to drive the motor 224 to decelerate and stop. The delay module 222 starts timing from the time point t1, and when the timing duration of the delay module 222 reaches the preset duration at a time point t7, the output signal of the delay module 222 changes from the high level to the low level at the time point t7, causing a signal corresponding to the fault information to change from the low level to the high level at the time point t7, that is, outputting the fault information. In this case, the movable device 20 stops operating, and drives the motor 224 to power off and brake. Therefore, the network between the security control system 100 and the movable device 20 being disconnected only affects the security output of the movable device (such as the slave station), without affecting the security output of the security control system 100 (such as the master station).

Continuing to refer to FIG. 7, the emergency stop event is triggered between the time point t3 and the time point t4, that is, the emergency stop signal sent by the master station changes to the low level between the time point t3 and the time point t4. At this time, the output signal of the first security control mechanism 11 changes from the high level to the low level at the time point t3 when the emergency stop event is triggered. Since the network is still disconnected at the time point t3, the output signals of the security control mechanism 41 and the delay module 222 continue to maintain the low level.

The reset event is triggered between the time point t5 and the time point t6, that is, the reset signal sent by the master station changes to the high level between the time point t5 and the time point t6. At this time, the output signal of the first security control mechanism 11 is restored from the low level to the high level at the time point t6 when the reset event is triggered. Since the network is still disconnected at the time point t6, the output signals of the security control mechanism 41 and the delay module 222 continue to maintain the low level.

At the time point t2, the network between the security control system 100 and the movable device 20 is restored, the security output of the security control mechanism 41 is restored from the low level to the high level at the time point t2, and the security output of the delay module 222 is also restored from the low level to the high level at the time point t2. The security control mechanism 41 outputs the operation resumption instruction, and in response to the operation resumption instruction, the signal corresponding to the fault code information is restored from the high level to the low level at the time point t8, that is, the fault information is cleared, and at this time, the movable device 20 resumes operation.

According to the security control method provided by the embodiment of the present disclosure, when the network between the movable device 20 and the security control system 100 is restored, the security control mechanism 41 determines that the reset event is triggered in response to receiving the reset signal, and controls the actuating mechanism 22 to resume operation, without manual intervention to resume the operation of the movable device 20, and the working efficiency of the movable device 20 is improved while ensuring the security operation of the movable device 20.

At step 640, the operation of the actuating mechanism is continued to stop under the control of the security control mechanism in response to the security control signal being the emergency stop signal.

In some embodiments, continuing to stop the operation of the actuating mechanism under the control of the security control mechanism in response to the security control signal being the emergency stop signal includes: when the network between the movable device 20 and the security control system 100 is restored, outputting, by the security control mechanism 41, a second level based on the emergency stop signal and continuing to stop the operation of the actuating mechanism 22 under the control of the security control mechanism 41.

In some examples, if the security control signal is the emergency stop signal, the security control mechanism 41 determines that the emergency stop event is triggered, the output of the security control mechanism 41 still maintains the second level (such as the low level), and the security control mechanism 41 controls the actuating mechanism 22 to continue to stop operating.

In some embodiments, the emergency stop event may be triggered before the network between the movable device 20 and the security control system 100 is disconnected, or the emergency stop event may be triggered during the period from the network between the movable device 20 and the security control system 100 being disconnected to the network being restored.

For example, if the emergency stop event is triggered before the network is disconnected, and the reset event is not triggered during the period from the network being disconnected to the network being restored, then when the network is restored, the security control mechanism 41 determines that the emergency stop event is triggered, and controls the actuating mechanism 22 to continue to maintain a status of stopping operation.

For another example, if the emergency stop event is triggered during the period from the network being disconnected to the network being restored, and the reset event is not triggered during the period from the network being disconnected to the network being restored, then when the network is restored, the security control mechanism 41 may receive the emergency stop signal sent by the first security control mechanism 11, and determine that the emergency stop event is triggered based on the emergency stop signal, and control the actuating mechanism 22 to continue to maintain the status of stopping operation.

It should be noted that the process of the security control mechanism 41 controlling the actuating mechanism 22 to continue to stop operating in step 640 is similar to the process of the security control mechanism 41 controlling the actuating mechanism 22 to stop operating in step 310, and details are not repeated here to avoid repetition.

At step 650, after the network between the movable device and the security control system is restored, in response to the security control mechanism acquiring the reset signal, the operation of the actuating mechanism is resumed under the control of the security control mechanism based on the reset signal.

In some embodiments, after the network between the movable device 20 and the security control system 100 is restored, if the security control mechanism 41 receives the reset signal sent by the security control system 100 or the security control mechanism 41 generates the reset signal, resuming the operation of the actuating mechanism under the control of the security control mechanism based on the reset signal includes that: after the network between the movable device 20 and the security control system 100 is restored, the output of the security control mechanism changes from the second level to the first level based on the received reset signal, and the security control mechanism 41 outputs the operation resumption instruction to the actuating mechanism 22, such that the actuating mechanism 22 resumes operation according to the operation resumption instruction.

For example, at a certain time point after the network is restored, if the security control mechanism 41 receives the reset signal sent by the first security control mechanism 11 and determines that the reset event is triggered according to the reset signal, since the network between the current security control system 100 and the movable device 20 is in a normal status and the reset signal indicating that the reset event is triggered is received, the security control mechanism 41 may control the actuating mechanism 22 to resume operation.

It should be noted that the process of the security control mechanism 41 controlling the actuating mechanism 22 to resume operation in step 650 is similar to the process of the security control mechanism 41 controlling the actuating mechanism 22 to resume operation in step 630, and details are not repeated here to avoid repetition.

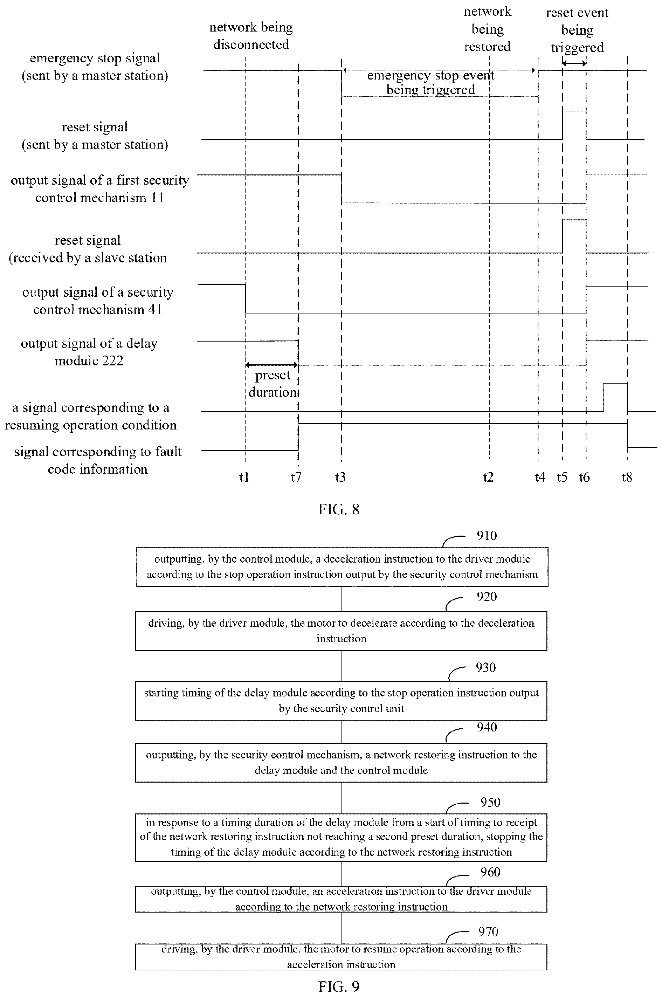

FIG. 8 is a schematic diagram illustrating another signal timing sequence provided by some embodiments of the present disclosure. As shown in FIG. 8, a time point t1 is a time point when the network between the security control system 100 and the movable device 20 is disconnected, and a time point t2 is a time point when the network between the security control system 100 and the movable device 20 is restored. An interval between a time point t3 and a time point t4 is a time point interval when the emergency stop event is triggered. An interval between a time point t5 and a time point t6 is a time point interval when the reset event is triggered. The time point t2 is before the time point t4, that is, when the network is restored, the emergency stop event is still in a triggered status.

As shown in FIG. 8, the network is disconnected at the time point t1, and the output signal of the first security control mechanism 11 does not change, maintaining the security output with the high level, and the output signal of the security control mechanism 41 changes from the high level to the low level in response to the network being disconnected at the time point t1. When the output of the security control mechanism 41 changes to the low level, the security control mechanism 41 outputs the stop operation instruction, and the control module 221 outputs the deceleration instruction to the driver module 223 according to the stop operation instruction to drive the motor 224 to decelerate and stop. The delay module 222 starts timing from the time point t1, and when the timing duration of the delay module 222 reaches the preset duration at a time point t7, the output signal of the delay module 222 changes from the high level to the low level at the time point t7, causing the signal corresponding to the fault information to change from the low level to the high level at the time point t7, that is, the fault information is output. At this time, the movable device 20 stops operating.

The emergency stop event is triggered between the time point t3 and the time point t4, and the output signal of the first security control mechanism 11 changes from the high level to the low level at the time point t3 when the emergency stop event is triggered. Since the network is still disconnected at the time point t3, the output signals of the security control mechanism 41 and the delay module 222 continue to maintain the low level.

At the time point t2, the network between the security control system 100 and the movable device 20 is restored, but since the emergency stop event is still in the triggered status at the time point t2, the outputs of the first security control mechanism 11, the security control mechanism 41 and the delay module 222 remain at the low level at the time point t2.

The reset event is triggered between the time point t5 and the time point t6, and the output signal of the first security control mechanism 11 is restored from the low level to the high level at the time point t6 when the reset event is triggered, and the output signals of the security control mechanism 41 and the delay module 222 are also restored to the high level at the time point t6.

After the security output of the security control mechanism 41 returns to the high level, the operation resumption instruction may be output. In response to the operation resumption instruction, the signal corresponding to the fault code information is restored from the high level to the low level at the time point t8, that is, the fault information is cleared. At this time, the movable device 20 resumes operation and drives the motor 224 to power off and brake.

According to the security control method provided by the embodiment of the present disclosure, if the security control mechanism 41 receives the emergency stop signal when the network is restored and determines that the emergency stop event is triggered, the actuating mechanism 22 is controlled to continue to stop until the security control mechanism 41 receives the reset signal sent by the security control system 100, After determining that the reset event is triggered, the actuating mechanism 22 may be controlled to resume operation. Thus, the security operation of the movable device 20 may be ensured while improving the working efficiency of the movable device 20.

FIG. 9 is a schematic diagram illustrating another security control method provided by an embodiment of the present disclosure. When satisfying the resuming operation condition includes the duration from the network being disconnected to the network being restored being less than the first preset duration, as shown in FIG. 9, resuming the operation of the actuating mechanism 22 under the control of the security control mechanism 41 may include steps 910 to 970 described below.

At step 910, the control module outputs a deceleration instruction to the driver module according to the stop operation instruction output by the security control unit.

At step 920, the driver module drives the motor to decelerate according to the deceleration instruction.

It should be noted that steps 910 to 920 are similar to the process in which the control module 221 outputs the deceleration instruction to the driver module 223 according to the stop operation instruction output by the security control mechanism 41 and the driver module 223 drives the motor 224 to decelerate according to the deceleration instruction in step 310 in the above embodiment, and details are not repeated here to avoid repetition.

At step 930, the delay module starts timing according to the stop operation instruction output by the security control mechanism.

At step 940, the security control mechanism outputs a network restoring instruction to the delay module and the control module.

At step 950, in response to a timing duration of the delay module from a start of timing to receipt of the network restoring instruction not reaching a second preset duration, the delay module stops timing according to the network recovery instruction.

At step 960, the control module outputs an acceleration instruction to the driver module according to the network restoring instruction.

At step 970, the driver module drives the motor to resume operation according to the acceleration instruction.

In some examples, after the delay module 222 starts counting according to the stop operation instruction output by the security control mechanism 41, since the duration from the network being disconnected to the network being restored is less than the first preset time, that is, the duration from the network being disconnected to the network being restored is less than the second preset time in the delay module 222, that is, when the network is restored, the timing duration of the delay module 222 has not reached the second preset time. In this case, when the network is restored, the output of the security control mechanism 41 changes to the high level, and the security control mechanism 41 outputs the network restoring instruction to the delay module 222 and the control module 221. Since the timing duration of the delay module 222 does not reach the second preset time, during the period from the network being disconnected to the network being restored (or receiving the network restoring instruction), the output of the driver module 223 remains at the high level without changing to the low level. Therefore, the delay module 222 may not output a power-off instruction to the driver module 224, and the motor does not need to be powered off and braked.

When the network between the movable device 20 and the security control system 100 is restored, the control module 221 outputs the acceleration instruction in response to the operation resumption instruction output by the security control mechanism 41, and the driver module 223 drives the motor 224 to accelerate and resume operation according to the acceleration instruction. For example, when the motor 224 receives the acceleration instruction, its operating speed may not have dropped to zero. At this time, the motor 224 may start to accelerate according to the acceleration instruction to resume to an original operating status; or, the motor 224 receives the acceleration instruction, and its operating speed has dropped to zero. At this time, the motor 224 may accelerate according to the acceleration instruction to resume to the original operating status.

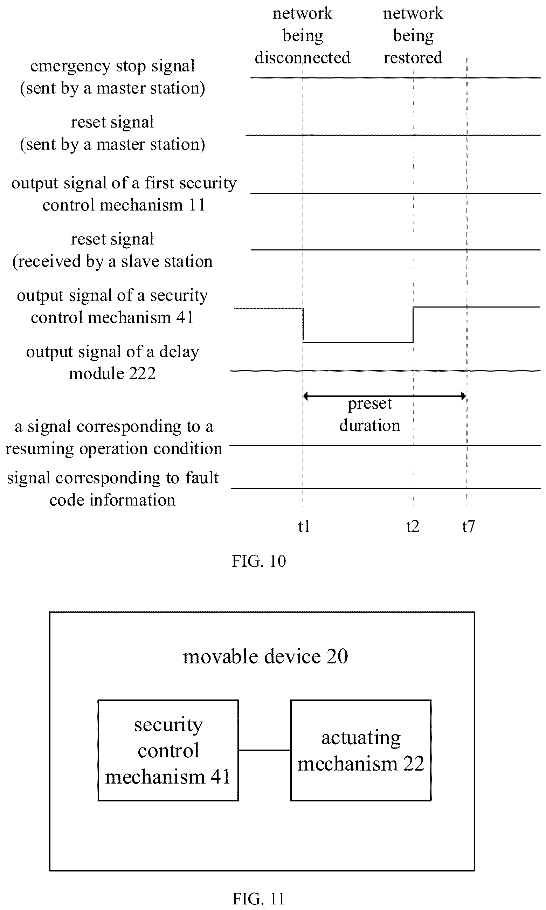

FIG. 10 is a schematic diagram illustrating yet another signal timing sequence provided by some embodiments of the present disclosure. As shown in FIG. 10, a time point t1 is a time point when the network between the security control system 100 and the movable device 20 is disconnected, and a time point t2 is a time point when the network between the security control system 100 and the movable device 20 is restored. A duration from the time point t1 to a time point t7 is a preset duration of the delay module 222. It should be noted that during a period from the time point t1 (network being disconnected) to the time point t2 (network being restored), neither the emergency stop event nor the reset event is triggered.

As shown in FIG. 10, the network is disconnected at the time point t1, and the output signal of the first security control mechanism 11 does not change, maintaining the security output with the high level; and the output signal of the security control mechanism 41 changes from the high level to the low level in response to the network being disconnected at the time point t1. When the output of the security control mechanism 41 changes to the low level, the security control mechanism 41 outputs the stop operation instruction, and the control module 221 outputs the deceleration instruction to the driver module 223 according to the stop operation instruction to drive the motor 224 to decelerate and stop. The delay module 222 starts timing from the time point t1. At the time point t2, the network is restored, and since the emergency stop event is not triggered, the output signal of the security control mechanism 41 changes from the low level to the high level.

As shown in FIG. 10, since the time point t7 is after the time point t2, it indicates that at the time point t2, a delayed timing duration of the delay module 222 has not reached the preset duration, that is, the timing of the delay module 222 has not ended, so the output signal of the delay module 222 maintains the high level, and the signal corresponding to the fault information may also maintain the low level, that is, the driver module 223 does not output the fault information, and the motor 224 does not need to be powered off and braked.

In the security control method provided by the embodiment of the present disclosure, if the duration from the network between the movable device 20 and the security control system 100 being disconnected to the network being restored is short, for example, the duration of the network being disconnected is less than the second preset duration of the delay module 222, there is no need to perform power off and brake processing on the motor 224, and only the motor 224 needs to be decelerated. Therefore, when the network is recovered, there is no need to perform the power on operation on the motor 224, and only the motor 224 needs to be controlled to accelerate and resume operation. The security control method of the embodiment of the present disclosure avoids the operation of powering on the motor 224 after the power off and brake processing in a short time, and reduces the duration for the movable device 20 to resume operation and improves the working efficiency of the movable device 20.

FIG. 11 is a schematic diagram illustrating a movable device provided by an embodiment of the present disclosure. As shown in FIG. 11, the movable device 20 includes a security control mechanism 41 and an actuating mechanism 22.

The security control mechanism 41 is configured to control the actuating mechanism 22 to stop operation when a network between the movable device and the security control system is disconnected.

The security control mechanism 41 is further configured to, when the network between the movable device and the security control system is restored, control the actuating mechanism 22 to resume the operation in response to determining that a resuming operation condition is satisfied, in which satisfying the resuming operation condition includes the security control mechanism 41 acquiring a reset signal and/or a duration from the network being disconnected to the network being restored being less than a first preset duration

In some embodiments, the actuating mechanism 22 includes a delay module, a control module, a driver module and a motor. The security control mechanism 41 is configured to output a stop operation instruction to the control module and the delay module; the control module is configured to receive the stop operation instruction, and output a deceleration instruction to the driver module according to the stop operation instruction; the driver module is configured to drive the motor to decelerate according to the deceleration instruction; the delay module is configured to receive the stop operation instruction, and start timing according to the stop operation instruction; and in a case where the timing duration of the delay module reaches a second preset duration, output a power-off instruction to the driver module; in which the first preset duration is less than or equal to the second preset duration; the driver module is also configured to drive the motor to power off and brake according to a power-off instruction, and output fault information.

In some embodiments, the security control mechanism 41 is further configured to acquire a security control signal when the network between the movable device and the security control system is restored, in which the security control signal includes the reset signal and/or an emergency stop signal; and determine that the resuming operation condition is satisfied in response to the security control signal being the reset signal. The security control mechanism 41 is further configured to control the operation of the actuating mechanism 22 to continue to stop in response to the security control signal being the emergency stop signal; and after the network between the movable device and the security control system is restored, in response to the security control mechanism 41 acquiring the reset signal, control the actuating mechanism to resume the operation based on the reset signal. The reset signal is a reset signal sent by the security control system, or a reset signal generated by the security control mechanism 41.

In some embodiments, the security control mechanism 41 is further configured to output an operation resumption instruction to the control module; the control module is configured to receive the operation resumption instruction, and output a power-on instruction to the driver module according to the operation resumption instruction; the driver module is configured to clear fault information according to the power-on instruction, drive the motor to power on and resume operation.

In some embodiments, the duration from the network being disconnected to the network being restored is less than the first preset duration; the actuating mechanism 22 includes a delay module, a control module, a driver module and a motor. The security control mechanism 41 is configured to output a stop operation instruction to the control module and the delay module; the control module is configured to receive the stop operation instruction, and output a deceleration instruction to the driver module according to the stop operation instruction; the driver module is configured to drive the motor to decelerate according to the deceleration instruction; the delay module is configured to receive the stop operation instruction, and start timing according to the stop operation instruction.

In some embodiments, the security control mechanism 41 is further configured to output a network restoring instruction to the delay module and the control module; in response to a timing duration of the delay module from a start of timing to receipt of the network restoring instruction not reaching a second preset duration, the delay module is further configured to stop the timing according to the network restoring instruction, in which the first preset duration is less than or equal to the second preset duration; the control module is further configured to output an acceleration instruction to the driver module according to the network restoring instruction; the driver module is further configured to drive the motor to resume operation according to the acceleration instruction.

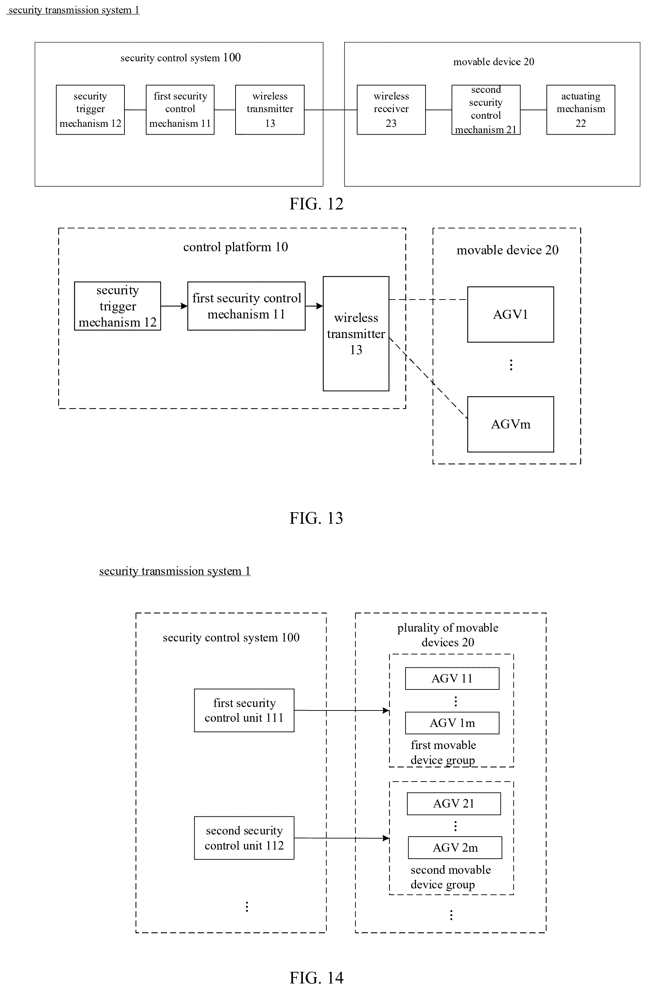

FIG. 12 is a schematic diagram illustrating a security control system provided by an embodiment of the present disclosure. As shown in FIG. 12, the security control system 1 includes a secure control system 100 and a movable device 20. The secure control system 100 includes a first secure control mechanism 11, a secure trigger mechanism 12, and a wireless transmitter 13, and the movable device 20 includes a second secure control mechanism 21, an actuating mechanism 22, and a wireless receiver 23.

The security trigger mechanism 12 is configured to generate a security trigger signal when a trigger operation is detected, and send the security trigger signal to the first security control mechanism 11; the first security control mechanism 11 is configured to receive the security trigger signal, generate a security control signal according to the security trigger signal, and send the security control signal via the wireless transmitter 13; in which the security control signal includes an emergency stop signal and/or a reset signal.

The second security control mechanism 21 is configured to receive the security control signal via the wireless receiver 23; the second security control mechanism 21 is further configured to control the actuating mechanism 22 to stop operating when the network between the movable device and the security control system 100 is disconnected, and when the network between the movable device and the security control system 100 is restored, control the actuating mechanism 22 to resume operation in response to determining that a resuming operation condition is satisfied, in which satisfying the resuming operation condition comprises the second security control mechanism 21 acquiring a reset signal and/or a duration from the network being disconnected to the network being restored being less than a first preset duration.

In some embodiments, the actuating mechanism 22 includes a delay module, a control module, a driver module and a motor. The second security control mechanism 21 is configured to output a stop operation instruction to the control module and the delay module; the control module is configured to receive the stop operation instruction, and output a deceleration instruction to the driver module according to the stop operation instruction; the driver module is configured to drive the motor to decelerate according to the deceleration instruction; the delay module is configured to receive the stop operation instruction, and start timing according to the stop operation instruction; and in a case where the timing duration of the delay module reaches a second preset duration, output a power-off instruction to the driver module; in which the first preset duration is less than or equal to the second preset duration; the driver module is also configured to drive the motor to power off and brake according to a power-off instruction, and output fault information.

In some embodiments, the second security control mechanism 21 is further configured to receive the security control signal sent by the first security control mechanism 11 when the network between the movable device and the security control system 100 is restored; in which the security control signal includes a reset signal and/or an emergency stop signal; determine that the security control signal satisfies the resuming operation condition in response to the security control signal being the reset signal; controls the actuating mechanism 22 to continue to stop operation in response to the security control signal being the emergency stop signal; and after the network between the movable device and the security control system 100 is restored, in response to the second security control mechanism 21 receiving the reset signal sent by the first security control mechanism 11, control the actuating mechanism to resume operation based on the reset signal.

**In** some embodiments, the second security control mechanism 21 is further configured to output an operation resumption instruction to the control module; the control module is further configured to receive the operation resumption instruction, and output a power-on instruction to the driver module according to the operation resumption instruction; the driver module is configured to clear fault information according to the power-on instruction, drive the motor to power on and resume operation.

In some embodiments, the duration from the network being disconnected to the network being restored is less than the first preset duration; the actuating mechanism 22 includes a delay module, a control module, a driver module and a motor. The second security control mechanism 21 is configured to output a stop operation instruction to the control module and the delay module; the control module is configured to receive the stop operation instruction, and output a deceleration instruction to the driver module according to the stop operation instruction; the driver module is configured to drive the motor to decelerate according to the deceleration instruction; the delay module is configured to receive the stop operation instruction, and start timing according to the stop operation instruction.

**In** some embodiments, the second security control mechanism 21 is further configured to output a network restoring instruction to the delay module and the control module; in response to a timing duration of the delay module from a start of timing to receipt of the network restoring instruction not reaching a second preset duration, the delay module is further configured to stop the timing according to the network restoring instruction, in which the first preset duration is less than or equal to the second preset duration; the control module is further configured to output an acceleration instruction to the driver module according to the network restoring instruction; the driver module is further configured to drive the motor to resume operation according to the acceleration instruction.

FIG. 13 is a schematic diagram illustrating another interaction scenario between a control platform and a movable device provided in an embodiment of the present disclosure.

In some examples, as shown in FIG. 13, the first security control mechanism 11 may include, for example, one security control unit, such as a central processing unit (CPU) and a security input/output module. The first security control mechanism 11 is configured to generate an emergency stop instruction when determining that an emergency stop event is triggered.

**In** some examples, the control platform 10 refers to a platform for controlling a plurality of movable devices 20. For example, in a warehouse management scenario, a warehouse may include a plurality of AGVs (such as AGV1 to Gam) and a control platform 10 for managing and controlling the plurality of AGVs. The control platform 10 may achieve scheduling, emergency stop resumption of operation over the movable device by controlling the movable device 20.

Generally, a load capacity of the control platform 10 is limited, that is, the number of the movable devices 20 (such as AGVs) that the control platform 10 may manage and control is limited. For example, the load capacity of the control platform 10 may be determined by the first security control mechanism 11 (such as a CPU). For example, the number of movable devices 20 that the control platform 10 may manage depends on a manufacturer and/or a model of the first security control mechanism 11.

In some examples, the control platform 10 generally includes one first security control mechanism 11. The number of the AGVs that may be controlled by the first security control mechanism 11 (such as a CPU) is generally several, dozens or hundreds. However, as development of movable device technology, in some large-scale warehouse management scenarios, the number of the AGVs required may reach several thousand. Under the premise of ensuring security transmission between the control platform 10 and the movable device 20, the existing control platform 10 is unable to control and manage these thousands of AGVs simultaneously.

In order to solve the above problems, the security control system in the security transmission system provided by the embodiment of the present disclosure may include a plurality of security control units, which may solve the problem of security control of all AGVs in the large-scale warehousing scenarios, such as when the number of the AGVs reaches thousands.

The security control system provided by the embodiments of the present disclosure may be described in detail below with reference to the accompanying drawings.

FIG. 14 is a schematic diagram illustrating yet another security transmission control system provided by an embodiment of the present disclosure. As shown in FIG. 14, in some embodiments, the security control system 100 includes the plurality of security control units. It should be noted that the security control system 100 in FIG. 14 is the security control system 100 in the above embodiments.

Illustratively, as shown in FIG. 14, the plurality of security control units include a first security control unit 111 and at least one second security control unit 112. For example, the first security control unit 111 is any one of the plurality of security control units, and the at least one second security control unit 112 is a security control unit among the plurality of security control units except the first security control unit 111.

In some examples, the number of the second security control unit 112 may be one or more, which is not limited in the embodiments of the present disclosure.

It should be noted that the security control system 100 may be the control platform 10 in the above embodiment (such as FIG. 13), and the security control unit may be the first security control mechanism 11 in the above embodiment (such as FIG. 13), that is, the security control unit may include a CPU.

For example, the security control system 100 may include n security control units, that is, the security control system 100 includes a first security control unit 111 and n-1 second security control units 112, where n is an integer greater than 1.

In some embodiments, each security control unit is configured to control one group of movable devices 20.

In some examples, one group of movable devices may include at least one movable device 20. For example, a plurality of movable devices 20 in the warehouse may be divided, according to the number of security control units, into a corresponding number of movable device groups. For example, if the number of security control units is n, the plurality of movable devices 20 may be divided into n groups. The number of movable devices in each group is m, that is, each security control unit may control m movable devices 20.

It should be noted that the movable device 20 in the embodiment of the present disclosure may be an AGV, or may be other type of movable device, such as a robot, etc. The embodiment of the present disclosure does not limit this. The embodiment of the present disclosure takes the movable device 20 as the AGV as an example for schematic description.

In some embodiments, the first security control unit is configured to: generate a first security control signal based on a first security trigger signal sent by a first security trigger device, and send the first security control signal to each of the at least one second security control unit; send a target security control signal to each of first movable devices in a first movable device group corresponding to the first security control unit based on the first security control signal. Each second security control unit is configured to: the target security control signal to each of second movable devices in a second movable device group corresponding to the each second security control unit based on the first security control signal.

Illustratively, the target security control signal may be the first security control signal. That is, the first security control unit may send the first security control signal to each of the first movable devices in the first movable device group corresponding to the first security control unit; and the each second security control unit may also send the first security control signal to each of the second movable devices in the second movable device group corresponding to the each second security control unit.

Illustratively, the target security control signal may also be generated based on the first security control signal. When the target security control signal is a signal generated based on the first security control signal, the target security control signal may be generated by combining the first security control signal and the second security control signal. The second security control signal is a signal generated based on a second security trigger signal sent by each of second security trigger devices in a second security trigger device group corresponding to the each second security control unit.

Taking the target security control signal as the first security control signal as an example, a structure of the security transmission system and the security control method corresponding to the security transmission system are Illustratively described in combination with FIGs 14 to 23.

It should be noted that the first security control signal may also be referred to as a security instruction. When the first security control signal is the security instruction, the security instruction is an instruction carrying the first security control signal. The following embodiments take the first security control signal as the security instruction as an example for illustrative description.

That is, in some embodiments, the first security control unit 111 is configured to generate the security instruction when determining that a security event is triggered, and send the security instruction (such as a first security control signal, and the security instruction is used as an example for illustrative description below) to the second security control unit 112 and each of movable devices in the first movable device group corresponding to the first security control unit 111. The second security control unit 112 is configured to receive the security instruction and send the security instruction to each of movable devices in a second movable device group corresponding to the second security control unit 112.

For example, the first security control unit 111 may control each of the movable devices in the first movable device group corresponding to the first security control unit 111 according to the security instruction, and the second security control unit 112 may control each of the movable devices in the second movable device group corresponding to the second security control unit 112 according to the security instruction. For example, the first security control unit 111 and the second security control unit 112 may control stop and operation of each movable device.

Illustratively, the first security control unit 111 and the second security control unit 112 may transmit (e.g., share) the security instruction with each other. That is, when any security control unit (e.g., the first security control unit 111) among the plurality of security control units generates the security instruction, in addition to sending the security instruction to each of the movable devices in the corresponding movable device group (e.g., the first movable device group), the first security control unit 111 may also send the security instruction to other security control units (e.g., the second security control unit 112), so that each of other security control units sends the security instruction to each of movable devices in the corresponding movable device group (e.g., the second movable device group), thus realizing that the security control system 100 may simultaneously perform emergency stop control and operation resumption control on all of the movable devices 20.

It should be noted that the embodiment of the present disclosure is illustratively described by taking an example that the first security control unit 111 generates the security instruction and sends the security instruction to the second security control unit 112.

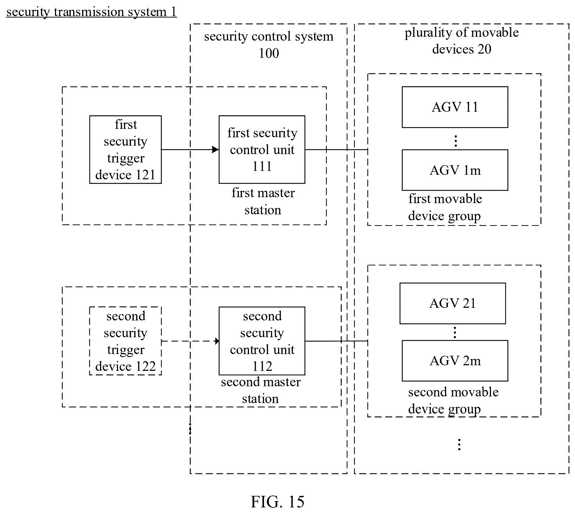

FIG. 15 is a schematic diagram illustrating another security transmission system provided by an embodiment of the present disclosure. As shown in FIG. 15, the first movable device group corresponding to the first security control unit 111 includes AGV11 to AGV1m, and the first security control unit 111 may send the generated security instruction to the AGV11 to the AGVlm to control stop (such as emergency stop) and operation (such as resumption of operation) of the AGV11 to AGV1m.

In some examples, the first security control unit 111 is coupled to the second security control unit 112. For example, the first security control unit 111 may be directly coupled to the second security control unit 112, or the first security control unit 111 may be indirectly coupled to the second security control unit 112 through other devices. Therefore, the first security control unit 111 may communicate with the second security control unit 112. For example, the first security control unit 111 may send a security instruction to the second security control unit 112, and the second security control unit 112 may receive the security instruction and send the security instruction to each of movable devices in a second movable device group, such as AGV21 to AGV2m, to control the stop and operation of the AGV21 to the AGV2m.

In some embodiments, as shown in FIG. 15, the security control system 1 further includes at least one (e.g., one or more) security trigger device, the at least one security trigger device includes a first security trigger device 121 coupled to the first security control unit 111.

In some embodiments, the first security trigger device 121 is configured to generate a first security trigger signal when a trigger operation is detected, and send the first security trigger signal to the first security control unit 111. The first security control unit 111 is configured to receive the first security trigger signal, and determine that the security event is triggered according to the first security trigger signal.

In some examples, the security trigger device may be the security trigger mechanism 12 in the above embodiment (such as FIG. 13). That is, the security trigger device may also include at least one of an emergency stop button, a light barrier, and a security gateway; or, the security trigger device may also be a workstation electrical cabinet, which is not limited in the embodiment of the present disclosure.

Illustratively, the number of security trigger devices may be the same as or different from the number of security control units. For example, if each of a plurality of security control units is coupled to one security trigger device, the number of security trigger devices is the same as the number of security control units. If a part (one or more) of the plurality of security control units is coupled to the security trigger device, the number of security trigger devices is less than the number of security control units.

In some examples, if the first security control unit 111 is coupled to the first security trigger device 121, then when detecting the trigger operation, the first security trigger device 121 may generate the first security trigger signal based on the trigger operation and send the first security trigger signal to the first security control unit 111. The first security control unit 111 receives the first security trigger signal and determines that the security event is triggered based on the first security trigger signal.

Illustratively, the security event includes an emergency stop event and/or a reset event. In some examples, the emergency stop event may be triggered by a trigger operation such as a user pressing the emergency stop button, or the light barrier being blocked, or the security gateway being turned off. The reset event may be triggered by a trigger operation such as a user pressing a reset button. Details are not limited in the embodiments of the present disclosure.

In some embodiments, the security instruction may be used to instruct the movable device 20 to stop or resume operation. Illustratively, the security instruction may include an emergency stop instruction and/or a reset instruction. It should be noted that if the security instruction is the first security control signal, the emergency stop instruction is an instruction carrying an emergency stop control signal, and the reset instruction is an instruction carrying a reset control signal.

For example, when the security event is the emergency stop event, the security instruction generated by the first security control unit 111 is the emergency stop instruction, which is configured to instruct the movable device 20 to stop operating (such as an emergency stop); when the security event is the reset event, the security instruction generated by the first security control unit 111 is the reset instruction, the reset instruction is configured to instruct the movable device 20 to resume operation.

For example, as shown in FIG. 15, the first security control unit 111 and the first security trigger device 121 may be referred to as a first master station, and the second security control unit 112 or the second security control unit 112 and the second security trigger device 122 (in a case where the security trigger device includes the second security trigger device 122 coupled to the second security control unit 112) may be referred to as a second master station. In other words, the second master station may include the security trigger device or may not include the security trigger device.

It should be noted that the first security control unit 111 may also be referred to as the first master station, and the second security control unit 112 may be referred to as the second master station, that is, the master station may include the security trigger device coupled to the security control unit, or may not include the security trigger device coupled to the security control unit, and Details are not limited in the embodiments of the present disclosure. The following embodiments are illustratively described by taking the master station including the security control unit and the security trigger device coupled to the security control unit as an example.

In some examples, if the second master station includes the security trigger device, such as the second security trigger device 122, when the second security trigger device 122 detects the trigger operation, the security trigger signal may be generated and sent to the second security control unit 112. The second security control unit 112 may generate the security instruction according to the received security trigger signal, and send the security instruction to each movable device in the second movable device group (such as the second movable device) and the first security control unit 111, such that the first security control unit 111 sends the security instruction to each of the movable devices in the first movable device group (such as the first movable device), to control the stop and operation of all of the movable devices.

In some examples, when the security control system 100 includes a plurality of security trigger devices, when any one security trigger device among the plurality of security trigger devices detects the trigger operation, the security trigger device may generate the security trigger signal and send the security trigger signal to the security control unit coupled to the security trigger device. The security control unit may generate the security instruction based on the security trigger signal, and then send the security instruction to its corresponding movable device group and other security control units, such that other security control units send the security instruction to their respective corresponding movable device groups, which may realize controlling all of the movable devices 20 by the security control system 100.

The security control system provided by the embodiment of the present disclosure includes the plurality of security control units, each of the security control units may control one group of movable devices. The plurality of security control units include the first security control unit 111 and the at least one second security control unit 112. The first security control unit 111 is configured to generate the security instruction when determining that the security event is triggered, and send the security instruction to each of movable devices in the first movable device group corresponding to the first security control unit 111, such that each of the movable devices in the first movable device group performs a corresponding operation according to the security instruction. The first security control unit 111 may also send the security instruction to the second security control unit 112, and the second security control unit 112 receives the security instruction and sends the security instruction to each of the movable devices in the second movable device group corresponding to the second security control unit 112, so that each of the movable devices in the second movable device group performs a corresponding operation according to the security instruction. Compared with the related art, the embodiment of the present disclosure increases the number of security control units in the security control system, and one security control unit controls one group of movable devices, thus expanding the number of movable devices that the security control system 100 may control and manage, and improving a load capacity of the security control system 100. Furthermore, since data transmission may be performed between respective security control units, it is also possible to achieve unified security control of all movable devices by the security control system 100 in a scenario having A large number of mobile devices.

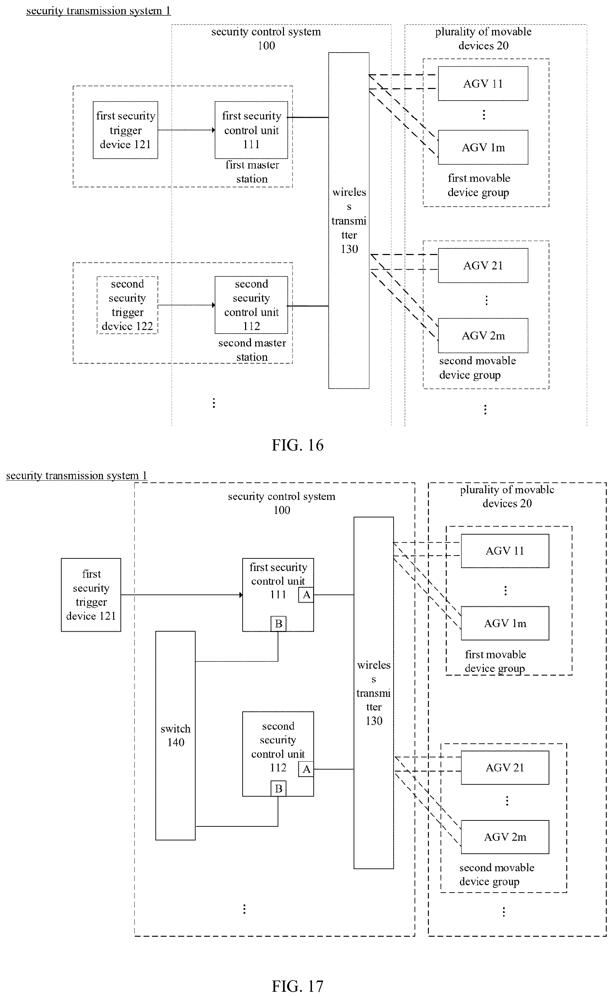

FIG. 16 is a schematic diagram illustrating another security control system provided in an embodiment of the present disclosure.

**In** some embodiments, as shown in FIG. 16, the security control system 100 further includes a wireless transmitter 130. The wireless transmitter 130 is coupled to a plurality of security control units respectively. The first security control unit 111 is configured to: send a security instruction to each of the first movable devices in the first movable device group corresponding to the first security control unit 111 via the wireless transmitter 130.

In some embodiments, the first security control unit 111 is further configured to send the security instruction to the second security control unit 112 via the wireless transmitter 130. The second security control unit 112 is configured to receive the security instruction via the wireless transmitter 130, and send the security instruction to each of the movable devices in the second movable device group corresponding to the second security control unit 112 via the wireless transmitter 130.

Illustratively, the wireless transmitter 130 may transmit communication data between each security control unit and each of the movable devices 20 in the movable device group corresponding to the each security control unit. For example, the wireless transmitter 130 is configured to perform data transmission between the first master station and each of the movable devices 20 in the first movable device group; or, the wireless transmitter 130 may also be used to transmit communication data between respective security control units, such as the wireless transmitter 130 is configured to perform data transmission between the first master station and the second master station (i.e., respective master stations).

**In** some examples, the wireless transmitter 130 may perform data transmission between the master station and each movable device group according to a preset correspondence between a plurality of security control units and a plurality of movable device groups. The preset correspondence may be pre-generated by the security control unit and sent to the wireless transmitter 130. For example, the first security control unit 111 may send the preset correspondence and the security instruction to the wireless transmitter 130, and the wireless transmitter 130 sends the security instruction to each of the movable devices in the first movable device group according to the preset correspondence. Alternatively, the preset correspondence may also be preset and stored in the wireless transmitter 130. For example, after the first security control unit 111 sends the security instruction to the wireless transmitter 130, the wireless transmitter 130 determines the first movable device group corresponding to the first security control unit 111 according to the stored preset correspondence, and sends the security instruction to each of the movable devices in the first movable device group. Details are not limited in the embodiments of the present disclosure.

In other examples, the security instruction sent by the security control unit may carry identification information, and the identification information is configured to instruct the wireless transmitter 130 to send the security instruction to each of the movable devices in the corresponding movable device group, or to other security control units.

In the security control system 100 provided by the embodiment of the present disclosure, the wireless transmitter 130 may be used to transmit the security instruction between each security control unit and each of the movable devices in its corresponding movable device group, and the wireless transmitter 130 may also be used to transmit the security instruction between respective security control units, thus achieving unified security management and control of all of the movable devices 20 by the security control system 100.

FIG. 17 is a schematic diagram illustrating another security control system provided by an embodiment of the present disclosure. As shown in FIG. 17, the security control system 100 further includes a switch 140.

Illustratively, as shown in FIG. 17, a plurality of security control units are coupled to the switch 140, and the plurality of security control units are also coupled to a wireless transmitter 130.

In some embodiments, the first security control unit 111 is configured to send a security instruction to the second security control unit 112 via the switch 140. The second security control unit 112 is configured to receive the security instruction via the switch 140, and send the security instruction to each of the movable devices in the second movable device group corresponding to the second security control unit 112 via the wireless transmitter 130.

Illustratively, the wireless transmitter 130 is configured to transmit communication data between each security control unit and each of the movable devices in the movable device group corresponding to the each security control unit. For example, the wireless transmitter 130 may send a scheduling instruction generated by system software to each of the movable devices 20. For another example, the wireless transmitter 130 may send the security instruction (such as an emergency stop instruction) generated by the first security control unit 111 to each of the movable devices in the first movable device group.

Illustratively, the switch 140 is configured to transmit transmission data between respective security control units, that is, transmission data between respective master stations. For example, the first security control unit 111 (such as the first master station) may send the generated security instruction (such as the emergency stop instruction) to the second security control unit 112 (such as the second master station) via the switch 140.

Illustratively, each security control unit may include two interfaces, namely, a first interface A and a second interface B. As shown in FIG. 15, the first interface A of each security control unit may be coupled to the wireless transmitter 130, and the second interface B of each security control unit may be coupled to the switch 140. It should be noted that each security control unit may also include more interfaces, such as three interfaces, which is not limited in the embodiments of the present disclosure.

In some embodiments, the first security control unit 111 is configured to: send a security instruction to the wireless transmitter 130 via the first interface A of the first security control unit 111, so that the wireless transmitter 130 sends the security instruction to each of the movable devices in the first movable device group. The first security control unit is also configured to: send the security instruction to the switch 140 via the second interface B of the first security control unit 111, so that the switch 140 sends the security instruction to the second security control unit 112. The second security control unit 112 is configured to: receive the security instruction via the second interface of the second security control unit 112, and send the security instruction to the wireless transmitter 130 via the first interface of the second security control unit 112, so that the wireless transmitter 130 sends the security instruction to each of the movable devices in the second movable device group.

In some examples, the number of switches 140 in the security control system 100 may be one or more. The number of switches 140 may be determined based on the number of ports of the switch 140 and the number of security control units. For example, when the number of security control units is less than the number of ports of the switch 140, one switch 140 may be used to implement transmission of the security instruction between the security control units. For another example, when the number of security control units is greater than the number of ports of the switch 140, a plurality of switches 140 may be used to implement the transmission of the security instruction between the security control units. It should be noted that when the number of switches 140 is more than one, data transmission may be performed between the plurality of switches 140, thus ensuring data transmission between the security control units.

The security control system provided by the embodiment of the present disclosure ensures security of the data transmission while realizing the data transmission between various security control units by adding the switch 140, thus avoiding the problem of network congestion caused by excessive data volume of the wireless transmitter 130.

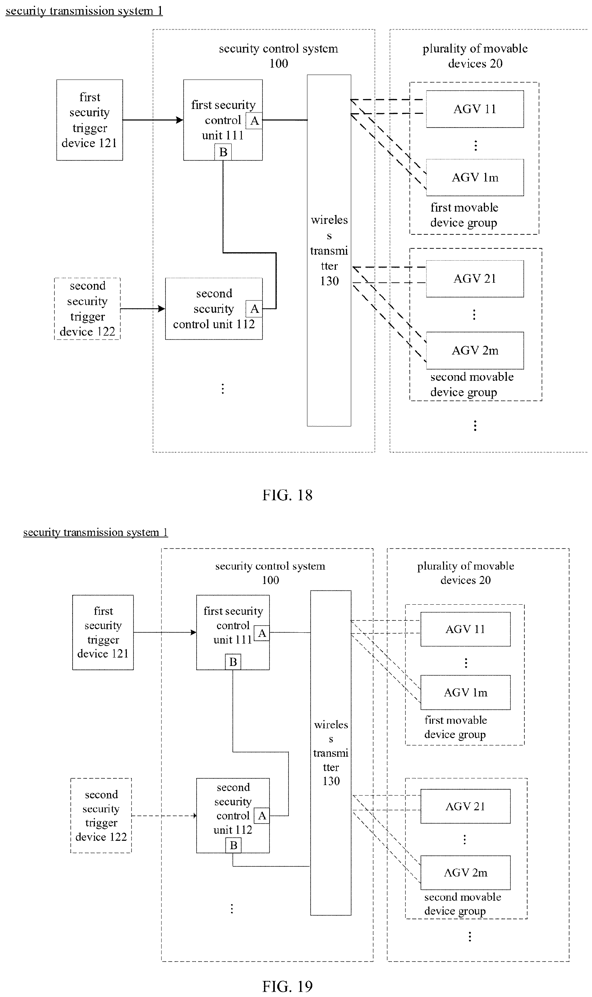

FIG. 18 is a schematic diagram illustrating another security control system provided by an embodiment of the present disclosure. As shown in FIG. 18, the second security control unit 112 may be coupled to the wireless transmitter 130 via the first security control unit 111.

In some embodiments, the first security control unit 111 is configured to: send the security instruction to each of the movable devices in the first movable device group corresponding to the first security control unit 111 via the wireless transmitter 130; the second security control unit 112 is configured to: receive the security instruction sent by the first security control unit 111, and send the security instruction to each of the movable devices in the second movable device group via the first security control unit 111 and the wireless transmitter 130.

In some embodiments, as shown in FIG. 18, the first interface A of the first security control unit 111 is coupled to the wireless transmitter 130, and the second interface B of the first security control unit 111 is coupled to the first interface A of the second security control unit. The first security control unit 111 is configured to generate the security instruction in a case of determining that a security event is triggered, send the security instruction to each of the movable devices in the first movable device group via the first interface A of the first security control unit 111 and the wireless transmitter 130, and send the security instruction to the second security control unit 112 via the second interface B of the first security control unit 111. The second security control unit 112 is configured to: receive the security instruction via the first interface A of the second security control unit 112, and send the security instruction to each of the movable devices in the second movable device group via the first security control unit 111 and the wireless transmitter 130.

In some examples, as shown in FIG. 18, when the first security control unit 111 is respectively coupled to the second security control unit 112 and the wireless transmitter 130, the first security control unit 111 may serve as a relay for data transmission, and the transmission data of other security control units (such as the second security control unit 112) may be transmitted to each of the movable devices in the corresponding movable device group via the first security control unit 111.

In some examples, if the first security trigger device 121 detects that the security event is triggered, the first security control unit 111 may generate the security instruction according to the security trigger signal sent by the first security trigger device 121. The first security control unit 111 may send the security instruction to the wireless transmitter 130 and the second security control unit 112 via the second interface B. The wireless transmitter 130 may send the security instruction sent by the first security control unit to each of the movable devices in the first movable device group (such as AGV11 to AGV1m). The second security control unit 112 receives the security instruction sent by the first security control unit via the first interface A, and sends the security instruction to each of the movable devices in the second movable device group (such as AGV21 to AGV2m) via the first security control unit 111 and the wireless transmitter 130. For example, the second security control unit 112 may process the received security instruction, and then send the security instruction to each of the movable devices in the second movable device group via the first security control unit 111 and the wireless transmitter 130, which is not limited in the embodiments of the present disclosure.

In some examples, if the second security trigger device 122 coupled to the second security control unit detects that the security event is triggered, the second security control unit 112 may generate the security instruction according to the security trigger signal sent by the second security trigger device 122. The second security control unit 112 sends the security instruction to the first security control unit 111 via the first interface A. The first security control unit 111 receives the security instruction via the second interface B, and sends the security instruction to the wireless transmitter 130 via the first interface A, such that the wireless transmitter 130 sends the security instruction to each of the movable devices in the first movable device group and each of the movable devices in the second movable device group.

FIG. 19 is a schematic diagram illustrating another security control system provided by an embodiment of the present disclosure. As shown in FIG. 19, the first security control unit 111 is coupled to the second security control unit 112, and the first security control unit 111 and the second security control unit 112 are coupled to the wireless transmitter 130 respectively.

In some embodiments, the first security control unit 111 is configured to: send the security instruction to each of the movable devices in the first movable device group corresponding to the first security control unit 111 via the wireless transmitter 130; the second security control unit 112 is configured to: receive the security instruction sent by the first security control unit 111, and send the security instruction to each of the movable devices in the second movable device group via the wireless transmitter 130.

In some embodiments, as shown in FIG. 19, the first interface A of the first security control unit 111 is coupled to the wireless transmitter 130, the second interface B of the first security control unit 111 is coupled to the first interface A of the second security control unit 112, and the second interface B of the second security control unit is coupled to the wireless transmitter 130. The first security control unit 111 is configured to: when determining that a security event is triggered, generate the security instruction, send the security instruction to each of the movable devices in the first movable device group (such as respective first movable devices) via the first interface A of the first security control unit 111 and the wireless transmitter 130, and send the security instruction to the second security control unit via the second interface B of the first security control unit 111. The second security control unit 112 is configured to: receive the security instruction via the first interface A of the second security control unit 112, and send the security instruction to each of the movable devices in the second movable device group (such as respective second movable devices) via the second interface B of the second security control unit and the wireless transmitter 130.

In some examples, the second security control unit 112 cascaded with the first security control unit 111 may also be coupled to the wireless transmitter 130. In this case, when the second security control unit 112 receives the security instruction sent by the second interface B of the first security control unit 111 cascaded with the second security control unit 112, the second security control unit 112 may send the security instruction to the wireless transmitter 130 via the second interface B of the second security control unit 112, such that the wireless transmitter 130 sends the security instruction to each of the movable devices in the second movable device group, to control the stop and operation of each of the movable devices.

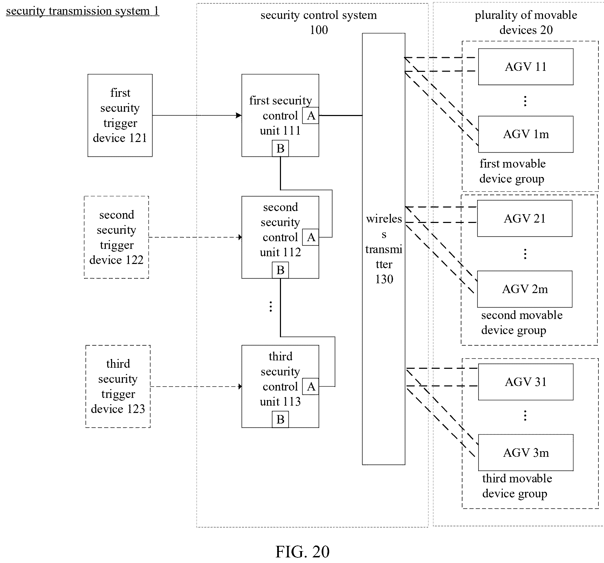

FIG. 20 is a schematic diagram illustrating another security control system provided by an embodiment of the present disclosure. As shown in FIG. 20, the plurality of security control units further includes a third security control unit 113.

For example, a first interface A of the third security control unit 113 is coupled to a second interface B of the second security control unit 112.

In some embodiments, the first security control unit 111 is configured to: generate a security instruction when determining that a security event is triggered, and send the security instruction to the second security control unit via the second interface B of the first security control unit 111. The second security control unit 112 is configured to: send the security instruction to the third security control unit 113 via the first interface A of the second security control unit 112 and via the second interface B of the second security control unit. The third security control unit 113 is configured to: receive the security instruction via the first interface A of the third security control unit 113, and send the security instruction to each of the movable devices in the third movable device group corresponding to the third security control unit 113 via the second security control unit, the first security control unit 111 and the wireless transmitter 130.

It should be noted that when the number of the second security control units 112 is more than one, that is, a plurality of security control units are coupled between the first security control unit 111 and the third security control unit 113, their connection manner and data transmission process are similar to the above process. Details are not repeated here to avoid repetition.

**In** some examples, if the second security control unit 112 is coupled to the third security control unit 113, the third security control unit 113 may receive the security instruction sent by the first security control unit 111 via the second security control unit 112, and then send the security instruction to each of the movable devices in the third movable device group via the second security control unit 112, the first security control unit 111 and the wireless transmitter 130.

**In** some examples, if the third security trigger device 123 detects that the security event is triggered, the third security control unit 113 may generate the security instruction according to a security trigger signal sent by the third security trigger device 123. The third security control unit 113 sends the security instruction to the second security control unit 112 via the first interface A. The second security control unit 112 receives the security instruction via the second interface B, and sends the security instruction to the first security control unit 111 via the first interface A. The first security control unit 111 receives the security instruction via the second interface B, and sends the security instruction to the wireless transmitter 130 via the first interface A, such that the wireless transmitter 130 sends the security instruction to each of the movable devices in the first movable device group, each of the movable devices in the second movable device group, and each of the movable devices in the third movable device group, respectively.

It should be noted that the embodiments of the present disclosure do not limit the security trigger device that triggers the security event, and the security trigger device may be a security triggering device coupled to any security control unit.

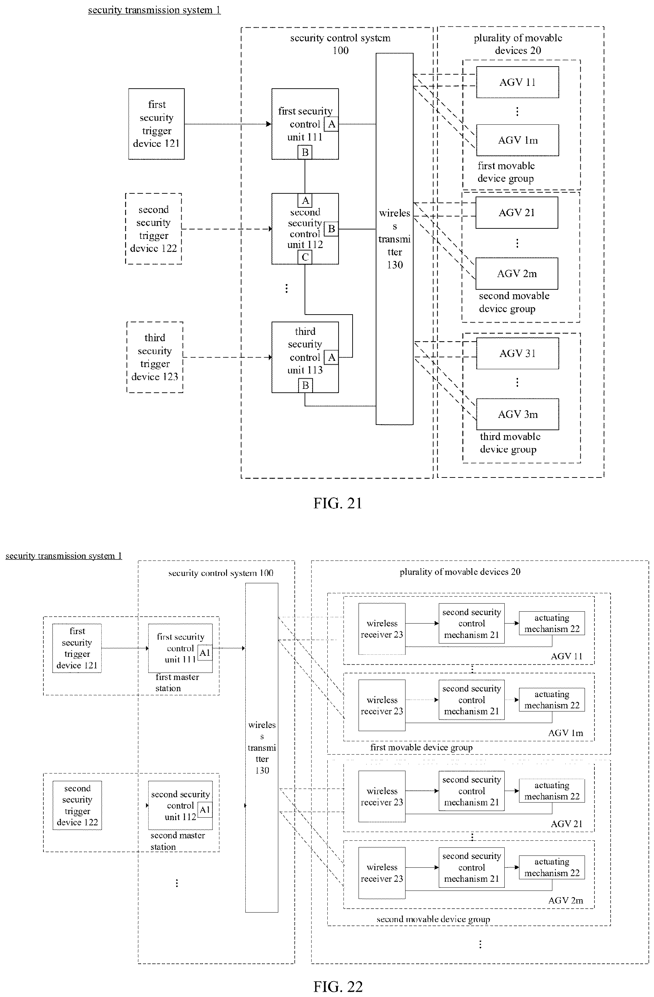

FIG. 21 is a schematic diagram illustrating another security control system provided by an embodiment of the present disclosure. As shown in FIG. 21, the plurality of security control units further includes a third security control unit 113.

Illustratively, the second security control unit 112 further includes a third interface C; the third interface C of the second security control unit 112 is coupled to a first interface A of the third security control unit 113, and a second interface B of the third security control unit 113 is coupled to the wireless transmitter 130.

In some embodiments, the second security control unit 112 is further configured to send a security instruction to the third security control unit 113 via the third interface C of the second security control unit 112. The third security control unit 113 is configured to receive the security instruction via the first interface A of the third security control unit 113, and send the security instruction to each of movable devices in the third movable device group corresponding to the third security control unit 113 via the second interface B of the third security control unit 113 and the wireless transmitter 130.

In some examples, when the second security control unit 112 further includes a third interface C, the first security control unit 111, the second security control unit 112, and the third security control unit 113 may be cascaded in sequence and respectively coupled to the wireless transmitter 130. In this case, when the second security control unit 112 receives the security instruction sent by the second interface B of the first security control unit 111, and sends the security instruction to the wireless transmitter 130 via the second interface B of the second security control unit 112, so that the wireless transmitter 130 sends the security instruction to each of the movable devices in the second movable device group, to control stop and operation of each of the movable devices. The second security control unit 112 may send the security instruction to the third security control unit 113 via the third interface C of the second security control unit 112. The third security control unit 113 receives the security instruction via the first interface A of the third security control unit 113, and sends the security instruction to the wireless transmitter 130 via the second interface B of the third security control unit 113, so that the wireless transmitter 130 sends the security instruction to each of the movable devices in the third movable device group, to control the stop and operation of each of the movable devices.

In the embodiments of the present disclosure, respective security control units are coupled in a cascade manner, and when one of the security control units (such as the first security control unit 111) is coupled to the wireless transmitter 130, other security control units coupled to the first security control unit 111 (such as the second security control unit 112 and/or the third security control unit 113) may send the security instruction to each of the movable devices in the corresponding movable device group via the first security control unit 111 and the wireless transmitter 130, thus realizing the unified security control of all of the movable devices 20 by the security control system 100. Alternatively, respective security control units may be directly cascaded with each other to transmit the security instruction, and the respective security control units are coupled to the wireless transmitter 130, and the security instruction acquired by each of the security control units is sent to each of the movable devices in the movable device group corresponding to the each security control unit via the wireless transmitter 130, thus realizing the unified security control of all of the movable devices 20 by the security control system 100.

FIG. 22 is a schematic diagram illustrating another security control system provided by an embodiment of the present disclosure. As shown in FIG. 22, the security control system 1 includes a secure control system 100 and a plurality of movable devices 20.

In some embodiments, the movable device 20 is configured to: receive a security instruction sent by a corresponding security control unit in the security control system 100, and perform a corresponding operation according to the security instruction.

In some examples, each of the plurality of movable devices 20 may receive a security instruction sent from the security control unit corresponding to the movable device group to which each movable device belongs. For example, each of the movable devices in the first movable device group may receive the security instruction sent by the first security control unit 111, and each of the movable devices in the second movable device group may receive the security instruction sent by the second security control unit 112, that is, the transmission manner between the plurality of security control units and the plurality of movable devices 20 described in FIGs. 16 and 17 in the above embodiments.

In other examples, each movable device may also receive the security instruction sent by the security control unit corresponding to the movable device group to which the each movable device belongs via other security control unit. For example, each movable device in the second movable device group may receive the security instruction sent by the second security control unit 112 via the first security control unit 111.

In some embodiments, as shown in FIG. 22, each movable device 20 includes a second security control mechanism 21 (such as the security control mechanism 41 in the above embodiment), a wireless receiver 23, and an actuating mechanism 22. The wireless receiver 23 is coupled to the wireless transmitter 130 in the security control system 100; the security control mechanism 21 is coupled to the wireless receiver 23 and the actuating mechanism 22 respectively.

The wireless receiver 22 is configured to receive the security instruction sent by the wireless transmitter 130, and send the security instruction to the security control mechanism 21. The security control mechanism 21 is configured to receive the security instruction, parse the security instruction according to a preset security communication protocol, to obtain a parsing result, and send the parsing result to the actuating mechanism 22. The actuating mechanism 22 is configured to perform the corresponding operation according to the parsing result.

In some examples, the actuating mechanism 22 may execute a stop operation corresponding to an emergency stop instruction, or execute a running operation corresponding to a reset instruction, based on the parsing result; or, may execute operations corresponding to other scheduling instructions, which is not limited in the embodiments of the present disclosure.

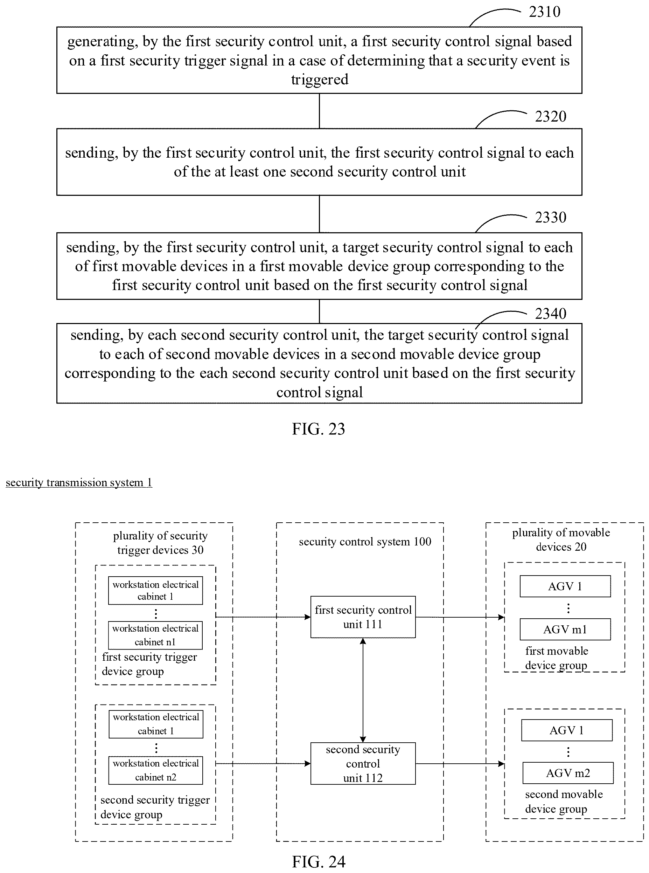

FIG. 23 is a schematic diagram illustrating another security control method provided by an embodiment of the present disclosure. As shown in FIG. 23, the method includes steps 2310 to 2340 as described below.

At step 2310, in a case of determining that a security event is triggered, the first security control unit generates first security control information based on a first security trigger signal.

At step 2320, the first security control unit sends first security control information to each of the at least one second security control unit.

At step 2330, the first security control unit sends a target security control signal to each of first movable devices in a first movable device group corresponding to the first security control unit based on the first security control signal.

At step 2340, each second security control unit sends the target security control signal to each of second movable devices in a second movable device group corresponding to the each second security control unit based on the first security control signal.

In some embodiments, the target security control signal may be the first security control signal. That is, step 2330 may include sending, by the first security control unit, the first security control signal to each of the first movable devices in the first movable device group corresponding to the first security control unit.

It should be noted that the first security control signal may also be sent to each of the first movable devices in a form of instruction, such as the first security control signal may also be called a security instruction. When the first security control signal is the security instruction, the security instruction carries the first security control signal, and the effect that may be achieved by the security instruction is the same as the effect that may be achieved by the first security control signal. The first security control signal in the method embodiment is the security instruction in the above embodiment.

The above steps 2310 to 2340 are described below when the target security control signal is the first security control signal.

In some embodiments, the security control system further includes a wireless transmitter coupled to a plurality of security control units.

Step 2320 includes: sending, by the first security control unit, the first security control signal to each of the at least one second security control unit via the wireless transmitter.

Step 2330 includes: sending, by the first security control unit, the first security control signal to each of the first movable devices in the first movable device group corresponding to the first security control unit via the wireless transmitter.

Step 2340 includes: receiving, by the each second security control unit, the first security control signal via the wireless transmitter, and sending, by the each second security control unit, the first security control signal to each of the second movable devices in the second movable device group corresponding to the each second security control unit via the wireless transmitter.

In some embodiments, the security control system further includes a switch coupled to the plurality of security control units.

Step 2320 includes: sending, by the first security control unit, the first security control signal to each of the at least one second security control unit via the switch.

Step 2340 includes: receiving, by the each second security control unit, the first security control signal via the switch, and sending, by the each second security control unit, the first security control signal to each of the second movable devices in the second movable device group corresponding to the each second security control unit via the wireless transmitter.

In some embodiments, first interfaces of the plurality of security control units are coupled to the wireless transmitter respectively, and second interfaces of the plurality of security control units are coupled to the switch respectively.

Step 2330 includes: sending, by the first security control unit, the first security control signal to the wireless transmitter via a first interface of the first security control unit, to enable the wireless transmitter to send the first security control signal to each of the first movable devices in the first movable device group corresponding to the first security control unit.

Step 2320 includes: sending, by the first security control unit, the first security control signal to the switch via a second interface of the first security control unit, to enable the switch to send the first security control signal to each of the at least one second security control unit.

Step 2340 includes: receiving, by the each second security control unit, the first security control signal via the switch and a second interface of the each second security control unit, and sending, by the each second security control unit, the first security control signal to the wireless transmitter via a first interface of the each second security control unit, to enable the wireless transmitter to send the first security control signal to each of the second movable devices in the second movable device group corresponding to the each second security control.

In some embodiments, the security control system further includes a wireless transmitter, and each of the at least one second security control unit is coupled to the wireless transmitter via the first security control unit.

Step 2330 includes: sending, by the first security control unit, the first security control signal to each of the first movable devices in the first movable device group corresponding to the first security control unit via the wireless transmitter.

Step 2340 includes: receiving, by the each second security control unit, the first security control signal sent by the first security control unit, and sending, by the each second security control unit, the first security control signal to each of the second movable devices in the second movable device group corresponding to the each second security control unit via the first security control unit and the wireless transmitter.

In some embodiments, a first interface of the first security control unit is coupled to the wireless transmitter, and a second interface of the first security control unit is coupled to a first interface of each of the at least one second security control unit.

Step 2330 includes: sending, by the first security control unit, the first security control signal to each of the first movable devices in the first movable device group corresponding to the first security control unit via the first interface of the first security control unit and the wireless transmitter.

Step 2320 includes: sending, by the first security control unit, the first security control signal to each of the at least one second security control unit via the second interface of the first security control unit.

Step 2340 includes: receiving, by the each second security control unit, the first security control signal via the first interface of the each second security control unit, and sending, by the each second security control unit, the first security control signal to each of the second movable devices in the second movable device group corresponding to the each second security control unit via the first security control unit and the wireless transmitter.

In some embodiments, the plurality of security control units further include a third security control unit, a first interface of the third security control unit is coupled to a second interface of each of the at least one second security control unit. The method further includes: sending, by the each second security control unit, the first security control signal to the third security control unit via the second interface of the each second security control unit; and receiving, by the third security control unit, the first security control signal via the first interface of the third security control unit, and sending, by the third security control unit, the first security control signal to each of third movable devices in a third movable device group corresponding to the third security control unit via the second security control unit, the first security control unit and the wireless transmitter

In some embodiments, the security control system further includes a wireless transmitter, the first security control unit is coupled to each of the at least one second security control unit, and the first security control unit and the at least one second security control unit are coupled to the wireless transmitter respectively.

Step 2330 includes: sending, by the first security control unit, the first security control signal to each of the first movable devices in the first movable device group corresponding to the first security control unit via the wireless transmitter.

Step 2340 includes: receiving, by the each second security control unit, the first security control signal sent by the first security control unit, and sending, by the each second security control unit, the first security control signal to each of the second movable devices in the second movable device group corresponding to the each second security control unit via the wireless transmitter.

In some embodiments, a first interface of the first security control unit is coupled to the wireless transmitter, and a second interface of the first security control unit is coupled to a first interface of each of the at least one second security control unit, and a second interface of each of the at least one second security control unit is coupled to the wireless transmitter.

Step 2330 includes: sending, by the first security control unit, the first security control signal to each of the first movable devices in the first movable device group corresponding to the first security control unit via the first interface of the first security control unit and the wireless transmitter.

Step 2320 includes: sending, by the first security control unit, the first security control signal to each of the at least one second security control unit via the second interface of the first security control unit.

Step 2340 includes: receiving, by the each second security control unit, the first security control signal via the first interface of the each second security control unit, and sending, by the each second security control unit, the first security control signal to each of the second movable devices in the second movable device group corresponding to the each second security control unit via the second interface of the each second security control unit and the wireless transmitter.

In some embodiments, the plurality of security control units further include a third security control unit, each of the at least one second security control unit further comprises a third interface, the third interface of the second security control unit is coupled to a first interface of the third security control unit, and the second interface of the third security control unit is coupled to the wireless transmitter. The method further includes: sending, by the each second security control unit, the first security control signal to the third security control unit via the third interface of the each second security control unit; and receiving, by the third security control unit, the target security control signal via the first interface of the third security control unit, and sending, by the third security control unit, the first security control signal to each of third movable devices in a third movable device group corresponding to the third security control unit via the second interface of the third security control unit and the wireless transmitter.

In some embodiments, the security transmission system further includes at least one security trigger device; the at least one security trigger device includes a first security trigger device coupled to the first security control unit. The method further includes: when detecting a trigger operation, generating and sending, by the first security trigger device, the first security trigger signal to the first security control unit; receiving, by the first security control unit, the first security trigger signal, and determining that the security event is triggered according to the first security trigger signal, in which the security event includes an emergency stop event and/or the reset event.

The following takes the target security control signal being a signal generated based on the first security control signal as an example, and the structure of the security transmission system and the security control method corresponding to the security transmission system are illustratively described in combination with FIGs. 24 to 30.

It should be noted that the target security control signal generated based on the first security control signal may also be called a security control instruction. When the target security control signal is the security control instruction, the security control instruction may be an instruction carrying the target security control signal. The following embodiments are illustrative being taking the target security control signal being the security control instruction as an example.

FIG. 24 is a schematic diagram illustrating another security transmission control system provided by an embodiment of the present disclosure. As shown in FIG. 24, the security control system 1 includes a security control system 100, a plurality of security trigger devices 30, and a plurality of movable devices 20. The security control system 100 includes a plurality of security control units.

In some embodiments, the security trigger device 30 may also include a workstation electrical cabinet. The workstation electrical cabinet is configured to perform security control on each workstation in a warehousing system. For example, each workstation electrical cabinet may support security control of a plurality of workstations, and the plurality of workstations may be workstations with different functions, such as a picking station, a security gateway, a shelving station, etc.

In some examples, when the number of the security trigger devices 30 (such as workstation electrical cabinets) in the security transmission system 1, the security control unit may receive security trigger signals respectively sent by the plurality of security trigger devices. For example, the security transmission system 1 may include n workstation electrical cabinets, namely, a workstation electrical cabinet 1 to a workstation electrical cabinet n, where n is an integer greater than 1.

Illustratively, each workstation electrical cabinet may respectively send an emergency stop signal and a reset signal to the security control unit. The security control unit may control each movable device to perform an emergency stop (i.e., stop operating) based on an emergency stop signal sent by the workstation electrical cabinet in a case of determining that an emergency stop event is triggered, and control each movable device to reset (i.e., resume operating) based on a reset signal sent by the workstation electrical cabinet in a case of determining that a reset event is triggered.

In some embodiments, the plurality of security control units include a first security control unit 111 and at least one second security control unit 112. The first security control unit 111 is any security control unit among the plurality of security control units, and the second security control unit 112 is a security control unit among the plurality of security control units except the first security control unit.

In some examples, the number of the at least one second security control unit 112 may be one or more. FIG. 24 shows one second security control unit 112 in the security control system 100. The embodiment of the present disclosure takes one second security control unit 112 as an example for illustrative description. It should be noted that the number of second security control units 112 may be set as required. For example, the number of security control units may be determined according to the number of movable devices and the number of security trigger devices in the warehousing system, which is not limited in the embodiment of the present disclosure.

For example, the security control system 100 may include p security control units, where p is an integer greater than 2. Each security control unit may be referred to as a master station (such as Master). That is, the security control system 100 includes a first security control unit 111 and (p-1) second security control units.

In some embodiments, each security control unit in the plurality of security control units is configured to control one group of movable devices, and is configured to receive a security trigger signal sent by each of security trigger devices in the corresponding security trigger device group.

Illustratively, each security control unit may correspond to one movable device group and one security trigger device group. For example, each security control unit may be associated with one security trigger device group to receive a security trigger signal sent by each of the security trigger devices in the security trigger device group. Each security control unit may be associated with one movable device group to perform security control on each of the movable devices in the movable device group.

Illustratively, a plurality of movable devices 20 may be divided into at least one movable device group, and a plurality of security trigger devices 30 may be divided into at least one security trigger device group. Each movable device group includes at least one movable device, and each security trigger device group includes at least one security trigger device.

In some examples, the plurality of movable devices 20 may be divided into 'a' movable device groups, and the number of movable devices included in each movable device group may be the same or different. As shown in FIG. 24, taking the security control system 100 including two security control units as an example, m AGVs may be divided into two movable device groups, a first movable device group includes m1 AGVs, a second movable device group includes m2 AGVs, where m1 and m2 are integers greater than or equal to 1, and a sum of m1 and m2 is m.

In some examples, the plurality of security trigger devices 30 may be divided into b security trigger device groups, and the number of security trigger devices included in each security trigger device group may be the same or different. As shown in FIG. 24, taking the security control system 100 including two security control units as an example, n workstation electrical cabinets may be divided into two security trigger device groups, a first security trigger device group includes n1 workstation electrical cabinets, and a second movable device group includes n2 workstation electrical cabinets, where n1 and n2 are integers greater than or equal to 1, and a sum of n1 and n2 is n.

It should be noted that when the number of security control units in the security control system 100 is greater, the n workstation electrical cabinets may be divided into a greater number of security trigger device groups, and the m AGVs may be divided into a greater number of movable device groups. For example, the number of security trigger device groups and the number of movable device groups may be determined according to the number of security control units, such as the number of security trigger device groups and the number of movable device groups are less than or equal to the number of security control units, which is not limited in the embodiments of the present disclosure.

Illustratively, a first preset association relationship between 'a' movable device groups and p security control units, and a second preset association relationship between b security trigger device groups and p security control units may be established.

In some examples, each of the plurality of security trigger devices 30 may be associated with one security control unit, and may only be associated with one security control unit. The one security control unit may be associated with a plurality of security trigger devices (i.e., one security trigger device group), and there are no identical security trigger devices in the security trigger device groups associated with different security control units. For example, the first security control unit is associated with the first security trigger device group, the second security control unit is associated with the second security trigger device group, and the n1 workstation electrical cabinets in the first security trigger device group and the n2 workstation electrical cabinets in the second security trigger device group are not repeated.

In some examples, each of the plurality of movable devices 20 may be associated with one security control unit, and may only be associated with one security control unit. One security control unit may be associated with the plurality of movable devices (i.e., one movable device group), and there are no identical movable devices in the movable device groups associated with different security control units. For example, the first security control unit is associated with the first movable device group, the second security control unit is associated with the second movable device group, and the m1 AGVs in the first movable device group and the m2 AGVs in the second movable device group are not repeated.

For example, as shown in Figure 24, when the first security control unit 111 is associated with the first security trigger device group, the first security control unit 111 may receive security trigger signals respectively sent by the n1 workstation electrical cabinets in the first security trigger device group, and the first security control unit may send security control instructions (such as target security control signals, illustrative explanation is given below using security control instructions as an example) to the m1 AGVs in the first movable device group to control the emergency stop or reset of each of movable devices in the first movable device group.

In some embodiments, each security control unit has a maximum number of connectable nodes. A sum of the number of security trigger devices in the security trigger device group associated with each security control unit and the number of movable devices in the associated movable device group is less than or equal to a maximum number of controllable nodes.

As shown in FIG. 24, the sum of the number of workstation electrical cabinets in the first security trigger device group (such as n1) and the number of AGVs in the first movable device group (such as m1) is less than or equal to the maximum number of controllable nodes of the first security control unit 111.

Illustratively, when grouping the plurality of movable devices 20 and the plurality of security trigger devices 30, the maximum number of connectable nodes of each security control unit needs to be considered. The maximum number of connectable nodes of the security control unit is configured to indicate the number of devices that the security control unit may connect and manage to a greatest extent. The maximum numbers of connectable nodes of different security control units may be the same or different. Details are not limited in the embodiments of the present disclosure.

In some examples, after grouping the security trigger device groups and the movable device groups is completed, the first preset association relationship between 'a' movable device groups and p security control units and the second preset association relationship between b security trigger device groups and p security control units may be established based on the maximum number of connectable nodes of each security control unit, thus ensuring that the sum of the number of security trigger devices in the security trigger device group associated with each security control unit and the number of the movable devices in the movable device group is less than or equal to the maximum number of connectable nodes.

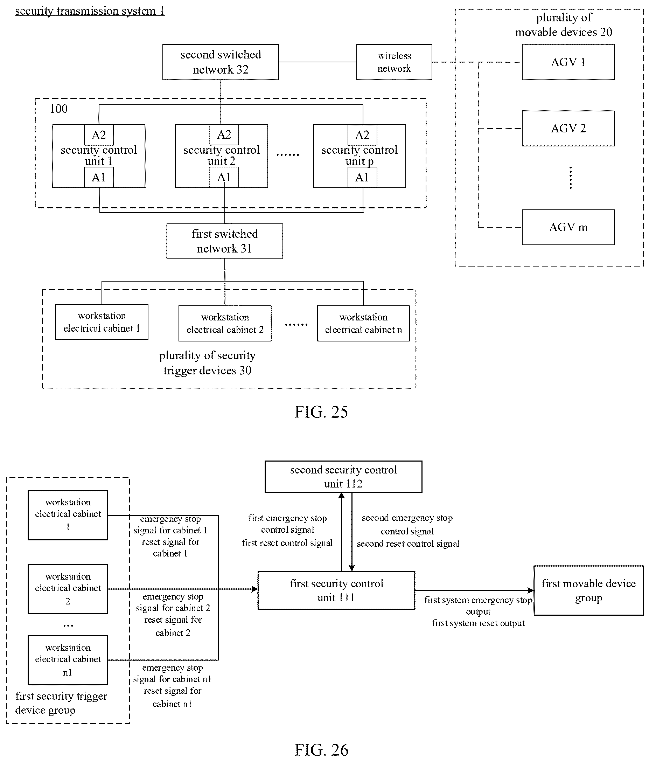

FIG. 25 is a schematic diagram illustrating another security transmission system provided by an embodiment of the present disclosure. As shown in FIG. 25, the security transmission system includes a security control system 100, a plurality of security trigger devices 30, and a plurality of movable devices 20. The security control system 100 includes p security control units, the plurality of security trigger devices 30 include n workstation electrical cabinets, and the plurality of movable devices 20 include n AGVs.

In some embodiments, each of the p security control units includes two interfaces, namely, a first interface A1 and a second interface A2.

**In** some embodiments, the first interface A1 of each security control unit is configured to couple with each security trigger device in the corresponding security trigger device group via the first switch network 31; the second interface A2 of each security control unit is configured to couple with each movable device in the corresponding movable device group via the second switch network 53.

As shown in FIG. 25, the first interface A1 of each security control unit and the n workstation electrical cabinets are respectively coupled to the first switch network 31, and the second interface A2 of each security control unit and the m AGVs are coupled to the second switch network 32 respectively.

In some embodiments, the first switch network 31 includes at least one first switch, and the second switch network 32 includes at least one second switch. The number of first switches is related to the number of the plurality of security control units and the number of the plurality of security trigger devices, and the number of second switches is related to the number of the plurality of security control units.

In some examples, each security control unit may correspond to the at least one first switch and the at least one second switch. For example, the first security control unit may be coupled to each first security trigger device via one (or more) first switches, and coupled to each first movable device via one (or more) second switches, which is not limited in the embodiments of the present disclosure.

In some examples, the number of devices that each first switch may access may be determined when the number of interfaces of the first switch is determined. Therefore, the number of first switches may be determined according to the number of the security control units and the security trigger devices that need to be accessed to the first switch.

For example, the plurality of security control units may share one first switch (or second switch), or different security control units may use different first switches (or second switches), which is not limited in the embodiments of the present disclosure.

In some embodiments, the first security control unit 111 is further configured to: establish a security connection with each of the first security trigger devices in the first security trigger device group via the first switch network 31; and establish a security connection with each of the first movable devices in the first movable device group via the second switch network 32.

As shown in FIG. 25, n workstation electrical cabinets may safely transmit the security trigger signal to the corresponding security control unit via the first switch network. The security control unit may generate the corresponding security control instruction based on the security trigger signal, and transmit the security control instruction to the corresponding AGV via the second switch network to achieve security control of the AGV.

In some embodiments, the first security control unit 111 is configured to: generate a first security control signal according to a first security trigger signal sent by each of the first security trigger devices in the first security trigger device group corresponding to the first security control unit, and send the first security control signal to each second security control unit. The second security control unit 112 is configured to: generate a second security control signal according to a second security trigger signal sent by each of the second security trigger devices in the second security trigger device group corresponding to the second security control unit, and send the first security control signal to the first security control unit.

In some embodiments, the first security control unit 111 may receive the first security trigger signal sent by each of the first security trigger devices in the first security trigger device group via the first interface A1 of the first security control unit 111 and the corresponding first switch; and send the first security control signal to the second security control unit 112 via the second interface of the first security control unit 111 and the corresponding second switch.

In some embodiments, the plurality of security control units are coupled in parallel, and each security control unit is accessed to the first switch network via the first interface and is accessed to the second switch network via the second interface.

As shown in FIG. 25, p security control units are coupled in parallel, that is, a security control unit 1, a security control unit 2, ..., a security control unit p are accessed to the first switch network 31 via their respective first interfaces, and are accessed to the second switch network 32 via their respective second interfaces, so as to realize the parallel connection between the p security control units.

Since the plurality of security control units are coupled in parallel, each security control unit may also directly send the security control instruction generated by the each security control unit to the corresponding movable device via the corresponding second switch more quickly to control the emergency stop or reset of the movable device. Each security control unit may directly receive the security trigger signal sent by the corresponding security trigger device via the corresponding first switch, and directly send the security control signal generated by the each security control unit to other security control units via the corresponding second switch, shortening a signal transmission time and improving a transmission efficiency.

It should be noted that the first security control unit 111 is any one of the plurality of security control units. Therefore, the first security control unit may be taken as an example for illustrative description. The processing process of other security control units is similar to the processing process of the first security control unit. Details are not described in the embodiments of the present disclosure to avoid repetition.

In some examples, each security control unit may receive the security trigger signal sent by each of the security trigger devices in its corresponding security trigger device group, and after performing logical processing on each security trigger signal, send the processed security trigger signal to each security control unit respectively. For example, the first security control unit generates the first security control signal based on the first security trigger signal sent by each first security trigger device and sends the first security control signal to the second security control unit, and the second security control unit generates the second security control signal based on the second security trigger signal sent by each second security trigger device and sends the second security control signal to the first security control unit. When the number of second security control units is more than one, in addition to sending the second security control signal to the first security control unit, the second security control unit also needs to send the second security control signal to other second security control units. In other words, the plurality of security control units send their generated security control signals to each other.

For example, as shown in FIG. 25, each security control unit may send a security control signal generated by itself to other security control units via the second switch network 32.

Illustratively, the security trigger signal includes an emergency stop signal and a reset signal. The first security trigger signal includes a first emergency stop signal and a first reset signal, and the second security trigger signal includes a second emergency stop signal and a second reset signal.

In some embodiments, the first security control unit 111 is configured to: perform a first logical operation on the first emergency stop signal sent by each of the first security trigger devices in the first security trigger device group to generate the first emergency stop control signal; perform a second logical operation on the first reset signal sent by each of the first security trigger devices in the first security trigger device group to generate the first reset control signal.

Illustratively, the first security control signal includes the first emergency stop control signal and the first reset control signal.

FIG. 26 is a schematic diagram illustrating a security control scenario provided in an embodiment of the present disclosure.

As shown in FIG. 26, a workstation electrical cabinet 1, a workstation electrical cabinet 2 to a workstation electrical cabinet n1 in a first security trigger device group respectively send an emergency stop signal (i.e., a first emergency stop signal) and a reset signal (i.e., a first reset signal) to the first security control unit 111. After receiving n1 emergency stop signals and n1 reset signals, the first security control unit 111 may perform a first logical operation on the n1 emergency stop signals to obtain the first emergency stop control signal, and perform a second logical operation on the n1 reset signals to obtain the first reset control signal; and send the first emergency stop control signal and the first reset control signal to each second security control unit 112.

That is, after receiving the n1 first emergency stop signals and the n1 reset signals, the first security control unit 111 may perform the first logic operation on the n1 first emergency stop signals and perform the second logic operation on the n1 reset signals.

Correspondingly, the second security control unit 112 may also receive emergency stop signals and reset signals respectively sent by n2 workstation electrical cabinets in a second security trigger device group, and obtain a second emergency stop control signal after performing the first logical operation on n2 emergency stop signals, and obtain a second reset control signal after performing the second logical operation on n2 reset signals; and send the second emergency stop control signal and the second reset control signal to each first security control unit 111.

Illustratively, the first emergency stop signal includes an emergency stop data signal, and the emergency stop data signal is configured to indicate whether the first emergency stop signal is used for emergency stop control. For example, whether the first emergency stop signal is used for emergency stop control may be determined according to a level of the emergency stop data signal.

In some examples, when the emergency stop data signal of the first emergency stop signal is at a low level (such as changing from a high level to the low level), the first emergency stop signal may be used for the emergency stop control. When the emergency stop data signal of the first emergency stop signal is at the high level (such as changing from the low level to the high level), the first emergency stop signal is used for non-emergency stop control or releasing control of an emergency stop status.

In some examples, when the emergency stop data signal of the first emergency stop signal is at the low level (e.g., 0) and the first emergency stop signal is used for the emergency stop control, the first logical operation may be an AND operation.

For example, the first security control unit 111 may perform the AND operation on the n1 first emergency stop signals to obtain the first emergency stop control signal. When the first emergency stop control signal is at the low level, it is determined that the first emergency stop control signal may control emergency stop of each first movable device. In other words, when the emergency stop signal sent by any of the n1 workstation electrical cabinets is at the low level, the first emergency stop control signal generated by the first security control unit may control the emergency stop of each first movable device.

Illustratively, the first emergency stop signal also includes an emergency stop status signal, and the emergency stop status signal is configured to indicate whether transmission of the first emergency stop signal is normal. When the transmission of the emergency stop status signal is abnormal, the first emergency stop control signal may also control the emergency stop of the first movable device.

In some examples, the emergency stop status signal of the first emergency stop signal is configured to indicate whether the first security control unit 111 normally receives the first emergency stop signal. If the first emergency stop signal is normally received by the first security control unit 111, the emergency stop status signal of the first emergency stop signal is denoted as ON; if the first emergency stop signal is not normally received by the first security control unit 111, that is, the first emergency stop signal is lost, the emergency stop status signal of the first emergency stop signal is denoted as OFF.

Illustratively, the first reset signal includes a reset data signal, and the reset data signal is configured to indicate whether the first reset signal is used for reset control. For example, whether the first reset signal is used for reset control may be determined according to a level of the reset data signal.

In some examples, when the reset data signal of the first reset signal is at the high level (such as changing from the low level to the high level), the first reset signal may be used for reset control; when the reset data signal of the first reset signal is at the low level (such as changing from the high level to the low level), the first emergency stop signal is used for non-reset control.

In some examples, when the reset data signal of the first reset signal is at the high level (e.g., 1) and the first reset signal is configured to perform the reset control, the second logic operation may be an OR operation.

For example, the first security control unit 111 may perform the OR operation on the n1 first reset signals to obtain the first reset control signal. When the first reset control signal is at the high level, it is determined that the first reset control signal may control the first movable device to reset (resume operation). In other words, when the reset signal sent by any of the n1 workstation electrical cabinets is at the high level, the first reset control signal generated by the first security control unit may control each first movable device to reset.

Illustratively, the first reset signal also includes a reset status signal, and the reset status signal is configured to indicate whether transmission of the first reset signal is normal. When the transmission of the reset status signal is abnormal, the first reset control signal cannot control the first movable device to resume operation.

In some examples, the reset status signal of the first reset signal is configured to indicate whether the first security control unit 111 normally receives the first reset signal. If the first reset signal is normally received by the first security control unit 111, the reset status signal of the first reset signal is denoted as ON; if the first reset signal is not normally received by the first security control unit 111, that is, the first reset signal is lost, the reset status signal of the first reset signal is denoted as OFF.

In some embodiments, the first security control unit 111 is configured to generate a security control instruction based on a first security control signal and at least one second security control signal, and control the emergency stop or reset of each of the first movable devices in the first movable device group corresponding to the first security control unit 111 based on the security control instruction.

In some embodiments, each second security control unit 112 is configured to: generate a security control instruction based on the first security control signal and at least one second security control signal, and control the emergency stop or reset of each second movable device in the second movable device group corresponding to the second security control unit 112 based on the security control instruction.

In some examples, any one of the at least one second security control unit (such as a current second security control unit) may generate a corresponding second security control signal (such as a current second security control signal), and receive the first security control signal sent by the first security control unit, as well as second security control signals sent by other second security control units, and then generate the security instruction based on the current second security control signal, the other second security control signals and the first security control signal.

It should be noted that the current second security control unit is any second security control unit in the at least one second security control unit, and the other second security control units are all of the second security control units in the at least one second security control unit except the current second security control unit. The at least one second security control signal includes the current second security control signal and the other second security control signals.

In some examples, the security instruction generated by the second security control unit may be the same as the security instruction generated by the first security control unit.

In some embodiments, the first security control unit 111 may send the security control instruction to each of the first movable devices in the first movable device group via the second interface and the corresponding second switch, to control the emergency stop or reset of each of the first movable devices.

In some examples, after each security control unit among p security control units generates its own corresponding security control signal and receives (p-1) security control signals sent by other security control units, the each security control unit may generate the security control instructions based on the p security control signals to control the emergency stop and reset of each of the movable devices in the movable device group corresponding to the each security control unit.

In some embodiments, the first security control unit is configured to: generate a first system control signal based on the first security control signal and the at least one second security control signal, and send the first system control signal to the second security control unit; and generate the security control instruction based on the first system control signal.

In some embodiments, the first system control signal includes a system emergency stop signal. When the first security control signal and/or the at least one second security control signal includes the emergency stop control signal, the first system control signal is the system emergency stop signal.

For example, when the first security control signal is the emergency stop control signal, or one (or more) of the at least one second security control signals is the emergency stop control signal, the first system control signal is the system emergency stop signal; or, when the first security control signal is the emergency stop control signal, and one (or more) of the at least one second security control signal is the emergency stop control signal, the first system control signal is also the system emergency stop signal.

In some examples, the first security control signal generated by the first security control unit 111 may be the emergency stop control signal for the emergency stop control. For example, when the first emergency stop control signal in the first security control signal is at the low level, the first security control signal may be used for emergency stop control, and the first security control signal is the emergency stop control signal. Accordingly, at least one second security control signal generated by each second security control unit 112 may also include the emergency stop control signal.

For example, when each of the p security control units obtains p security control signals, as long as there is an emergency stop control signal among the p security control signals, the first system control signal is the system emergency stop signal. The security control unit may generate the emergency stop control instruction according to the system emergency stop signal, and the emergency stop control instruction is configured to control each movable device corresponding to each security control unit to stop operating.

In some embodiments, if the system emergency stop signal exists in the first system control signal and/or the at least one second system control signal, and/or a signal indicating an abnormal connection status exists in a first connection status signal and/or at least one second connection status signal, the emergency stop control instruction is generated to control the emergency stop of each of the first movable devices in the first movable device group; and each of the first movable devices in the first movable device group is controlled to emergency stop based on the emergency stop control instruction.

Illustratively, each security control unit may also send its corresponding connection status signal to other security control units, and the connection status signal of the security control unit is configured to indicate whether the connection status between the security control units is normal.

In some examples, when the connection status of any security control unit in the p security control units is abnormal, each movable device may be controlled to stop operating. That is, when the connection status of any security control unit is abnormal, an emergency stop event may also be triggered, and each security control unit may generate the emergency stop control instruction to control each corresponding movable device to stop operating.

In some examples, when there is the system emergency stop signal in the first system control signal and/or the at least one second system control signal, and/or there is the signal indicating the abnormal connection status in the first connection status signal and/or the at least one second connection status signal, the emergency stop event may be triggered. Therefore, the emergency stop control instruction may be generated to control each movable device to stop operating.

In some examples, when the first security control signal is the emergency stop control signal or the signal indicating the abnormal connection status, the emergency stop control instruction may be generated. Or, if one (or more) of the at least one second security control signals is the emergency stop control signal or the signal indicating the abnormal connection status, the emergency stop control instruction may also be generated. Or, when the first security control signal is the emergency stop control signal or the signal indicating the abnormal connection status, and one (or more) of the at least one second security control signal is the emergency stop control signal or the signal indicating the abnormal connection status, the emergency stop control instruction may also be generated.

That is, when the connection status of any of the p security control units is abnormal or the emergency stop control signal is generated, each of the p security control units may generate the emergency stop control instruction to control the corresponding movable device to stop operating, further ensuring output consistency of each security control unit.

The security control system provided by the embodiment of the present disclosure includes a plurality of security control units, each of the plurality of security control units is configured to control one group of movable devices and to receive the security trigger signal sent by each of the security trigger devices in the corresponding security trigger device group; each security control unit may generate the security control signal based on the security trigger signal sent by each of the security trigger devices in the corresponding security trigger device group, and after receiving the security control signals sent by other security control units, generate the security control instruction based on respective security control signals, and control each of the movable devices in the corresponding movable device group to emergence stop or reset based on the security control instruction. Therefore, the security control system provided by the embodiment of the present disclosure may realize a demand for control of large-scale movable devices via joint control of the plurality of security control units, and is more suitable for a large-scale warehouse system. Furthermore, each security control unit may send its own generated security control signals to each other, which ensures consistency and reliability of outputs of the respective security control units, and improves security of the security control system.

In some embodiments, each security control unit includes a merged channel and a system channel. The merged channel includes a reset channel, an emergency stop 1 channel and an emergency stop 2 channel, and the system channel includes a system emergency stop channel and a security connection channel.

In some examples, the reset channel is configured to receive and process the reset signal sent by each workstation electrical cabinet. For example, the reset channel may perform an OR operation on the reset signals sent by respective workstation electrical cabinets to obtain the reset control signal. The emergency stop 1 channel is configured to receive and process the emergency stop signals sent by respective workstation electrical cabinets. For example, the emergency stop 1 channel may perform an AND operation on the emergency stop signals sent by the respective workstation electrical cabinets to obtain the emergency stop control signal. The emergency stop 2 channel is a redundant channel for the emergency stop 1 channel. When an emergency stop control signal output by the emergency stop 1 channel is inconsistent with an emergency stop control signal output by the emergency stop 2 channel, it indicates that there is an abnormality in the transmission process, and emergency stop processing is required.

In some examples, the system emergency stop channel is configured to generate the system control signal and send the system control signal to other security control units; the security connection channel is configured to send the connection status signal of each security control unit to other security control units. Therefore, when the system control signal generated by any security control unit is the emergency stop control signal, the other security control units may receive the emergency stop control signal and control the corresponding movable device to stop operating. Or, when the connection status of any security control unit is abnormal, the other security control units may receive an abnormal signal and control the corresponding movable devices to stop operating.

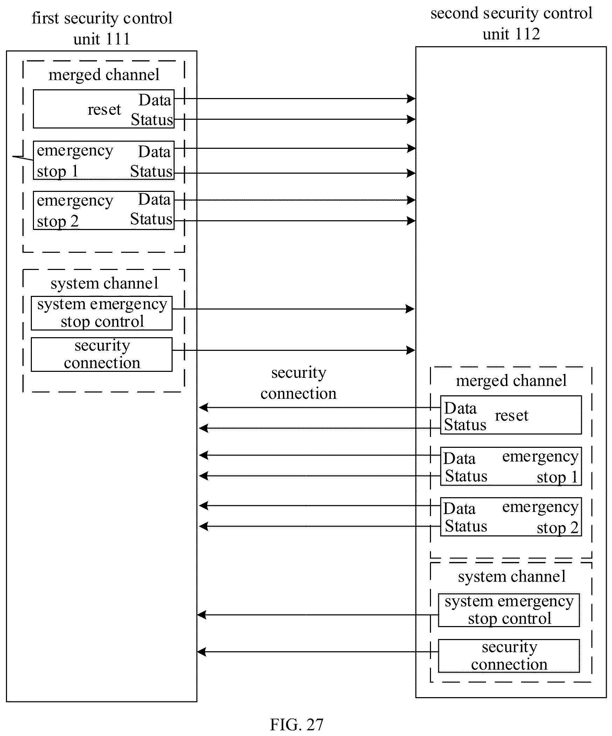

FIG. 27 is a schematic diagram illustrating an interaction between security control units provided by an embodiment of the present disclosure. It should be noted that FIG. 27 shows an interaction process between a first security control unit 111 and a second security control unit 112. For an interaction process between any other two security control units in the security control system 100, reference may be made to FIG. 27.

As shown in FIG. 27, the first security control unit 111 may send signals of a reset channel, an emergency stop 1 channel, and an emergency stop 2 channel to the second security control unit 112, respectively. Each channel includes a data signal (Data) and a status signal (Status). For example, the data signal of the reset channel may be obtained by performing an OR operation based on reset signals sent by respective first security trigger devices, the data signal of the emergency stop 1 channel may be obtained by performing the AND operation based on emergency stop signals sent by emergency stop 1 channels of respective first security trigger device, and the data signal of the emergency stop 2 channel may be obtained by performing the AND operation based on emergency stop signals sent by emergency stop 2 channels of respective first security trigger devices.

As shown in FIG. 27, the system emergency stop channel of the first security control unit 111 may send the system emergency stop signal determined by the first security control unit 111 to the second security control unit 112, and a security connection channel of the first security control unit 111 may send the connection status signal of the first security control unit 111 to the second security control unit 112.

Similarly, the second security control unit 112 may also send signals of its reset channel, emergency stop 1 channel, emergency stop 2 channel, system emergency stop channel, and security connection channel to the first security control unit.

In the security control system provided by the embodiment of the present disclosure, each security control unit may receive the signal when any security control unit determines that the emergency stop event is triggered, and may control all of the movable devices to stop operating, thus achieving security control over all of the movable devices.

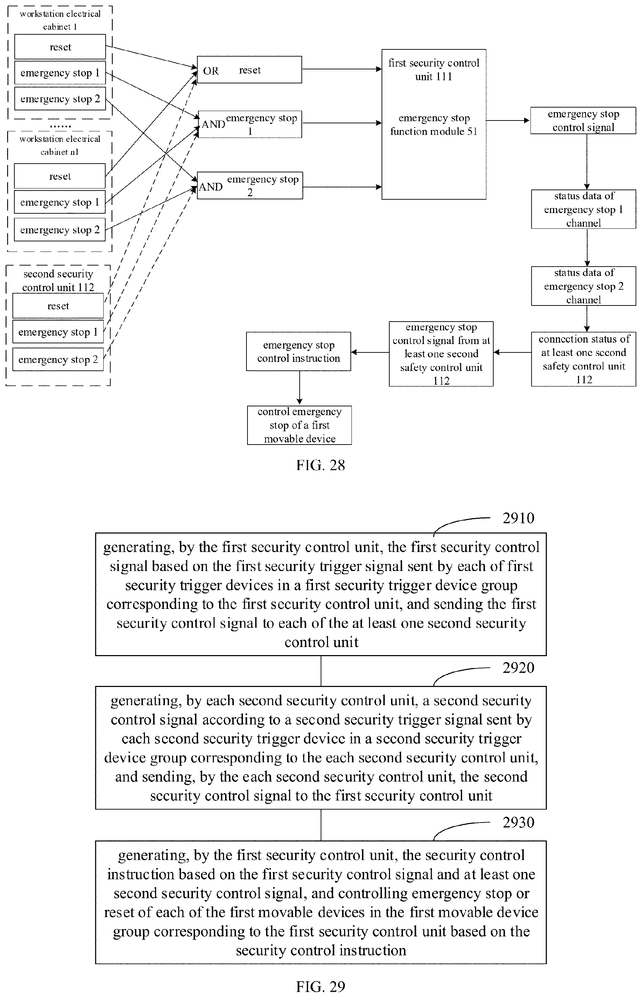

FIG. 28 is a schematic diagram illustrating another security control scenario provided by an embodiment of the present disclosure. As shown in FIG. 28, the first security control unit 111 includes an emergency stop function module 51.

As shown in FIG. 28, the first security control unit 111 performs logical processing on reset signals and emergency stop signals respectively sent by n1 workstation electrical cabinets. For example, the first security control unit 111 may perform an OR operation on the reset signals sent by the workstation electrical cabinets and other security control units, and perform an AND operation on emergency stop signals sent by the workstation electrical cabinets and other security control units to obtain an emergency stop control signal. Then, the first security control unit 111 may generate an emergency stop control instruction based on the emergency stop control signal, status data of the emergency stop 1 channel, status data of the emergency stop 2, and connection status signals and emergency stop control signals of respective second security control units 112, and controls each of first movable devices in a first movable device group to perform emergency stop according to the emergency stop control instruction.

That is, each security control unit performs logical processing on the emergency stop signals and reset signals of the corresponding workstation electrical cabinets, as well as emergency stop signals and reset signals input by other security control units, and then sends the processed signal to other security control units. The system emergency stop signal and the connection status signal of the system channel of each security control unit may also be sent to other security control units.

After generating the system emergency stop signal, the first security control unit 111 may determine the output emergency stop control instruction based on the system emergency stop signal of the first security control unit, as well as the connection status signals and system emergency stop signals of other security control units (i.e., at least one second security control unit). In other words, the system emergency stop signal generated by each security control unit may be connected in series with the connection status signals and the system emergency stop signals of other security control units to determine the emergency stop control instruction output by each security control unit, which may ensure the consistency of the emergency stop control instructions output by the respective security control units and realize output interlocking between the respective security control units. Therefore, when the emergency stop of any workstation electrical cabinet is triggered, each security control unit may obtain and generate the corresponding emergency stop control instruction, thus realizing the emergency stop control of the movable device under its own control, and ensuring consistency and reliability of the security action.

In the embodiment of the present disclosure, with sending the emergency stop control signals and the connection status signals output by the system between the security control units, it may achieve output interlocking between the security control units, and ensure the consistency and reliability of outputs of the respective security control units.

FIG. 29 is a schematic diagram illustrating another security control method provided by an embodiment of the present disclosure. It should be noted that the security control method shown in FIG. 29 may be implemented by the security control system 100 in the above embodiment. As shown in FIG. 29, the method includes steps 2910 to 2930 as shown below.

At step 2910, the first security control unit generates a first security control signal according to a first security trigger signal sent by each of first security trigger devices in a first security trigger device group corresponding to the first security control unit, and sends the first security control signal to each of the at least one second security control unit.

It should be noted that the function implemented by step 2910 is the same as the function implemented by step 2310 and step 2320 in the above embodiment.

At step 2920, each second security control unit generates a second security control signal according to a second security trigger signal sent by each of second security trigger devices in a second security trigger device group corresponding to the each second security control unit, and sends the second security control signal to the first security control unit.

At step 2930, the first security control unit generates a security control instruction based on the first security control signal and at least one second security control signal, and controls emergency stop or reset of each of the first movable devices in the first movable device group corresponding to the first security control unit based on the security control instruction.

In some examples, in step 2330, sending, by the first security control unit, the target security control signal to each of the first movable devices in the first movable device group based on the first security control signal includes: generating, by the first security control unit, the target security control signal based on the first security control signal, and sending the target security control signal to each of the first movable devices in the first movable device group.

Generating, by the first security control unit, the target security control signal based on the first security control signal includes: generating, by the first security control unit, the target security control signal based on the first security control signal and the at least one second security control signal. The target security control signal may also be called a security control instruction. When the target security control signal is the security control instruction, the security control instruction carries the target security control signal. The effect that may be achieved by the target security control signal is the same as the effect that may be achieved by the security control instruction. In the method embodiment, the target security control signal is the security control instruction in the above embodiment.

It should be noted that the specific process of the above steps 2910 to 2930 has been described in detail in the above security control system embodiment, and the technical effects that may be achieved by the specific process of the above steps 2910 to 2930 are similar to the technical effects that may be achieved by the above security control system. Details are not repeated here to avoid repetition.

In some embodiments, the first security control signal includes a first emergency stop signal and a first reset signal; step 2910 includes: generating, by the first security control unit, a first emergency stop control signal by performing a first logic operation on first emergency stop signals sent by the first security trigger devices in the first security trigger device group; generating, by the first security control unit, a first reset control signal by performing a second logic operation on first reset signals sent by the first security trigger devices in the first security trigger device group.

In some embodiments, step 2930 includes: generating, by the first security control unit, a first system control signal according to the first security control signal and the at least one second security control signal, and sending, by the first security control unit, the first system control signal to the at least one second security control unit, in which, when an emergency stop control signal is present in the first security control signal and/or the at least one second security control signal, the first system control signal is a system emergency stop signal; and generating, by the first security control unit, the target security control signal based on the first system control signal.

In some embodiments, the method also includes: receiving, by the first security control unit, a second system control signal and a second connection status signal sent by each of the at least one second security control unit; step 2930 includes: generating, by the first security control unit, a security control instruction based on the first system control signal, a first connection status signal corresponding to the first security control unit, and the second system control signal and the second connection status signal corresponding to each of the at least one second security control unit.

In some embodiments, step 2930 includes: in response to presence of the system emergency stop signal in the first system control signal and/or the at least one second system control signal, and/or presence of a signal in an abnormal connection status in the first connection status signal and/or the at least one second connection status signal, generating an emergency stop control instruction for controlling emergency stop of each of the first movable devices in the first movable device group. The security control instruction includes the emergency stop control instruction, and the emergency stop control instruction is configured to control the emergency stop of each of first movable devices in the first movable device group.

In some embodiments, each of the plurality of security control units comprises a first interface and a second interface, the first interface of each security control unit is configured to couple with each of the security trigger devices in the security trigger device group corresponding to the each security control unit via a first switch network, the second interface of each security control unit is configured to couple with each of movable devices in a movable device group corresponding to the each security control unit via a second switch network, and the method further includes: establishing, by the first security control unit, a secure connection with each of first security trigger devices in a first security trigger device group via the first switch network, and establishing, by the first security control unit, a secure connection with each of the first movable devices in the first movable device group via the second switch network.

In some embodiments, the plurality of security control units are coupled in parallel, and each of the security control units accesses to the first switch network via the first interface and accesses to the second switch network via the second interface.

In some embodiments, the first switch network comprises at least one first switch, and the second switch network comprises at least one second switch, a numerical count of the first switches is related to a numerical count of the plurality of security control units and a numerical count of the plurality of security trigger devices, and a numerical count of the second switches is related to the numerical count of the plurality of security control units.

In some embodiments, the method also includes: receiving, by the first security control unit, the first security trigger signal sent by each of the first security trigger devices in the first security trigger device group via the first interface of the first security control unit and the corresponding first switch; sending, by the first security control unit, the first security control signal to each of the at least one second security control unit via a second interface of the first security control unit and the corresponding second switch, and sending, by the first security control unit, the target security control signal to each of the first movable devices in the first movable device group to control emergency stop or reset of each of the first movable devices.

In some embodiments, a sum of a numerical count of first security trigger devices in a first security trigger device group and a numerical count of the first movable devices in the first movable device group is less than or equal to a maximum numerical count of connectable nodes of the first security control unit.

In some embodiments, the security trigger device includes a workstation electrical cabinet.

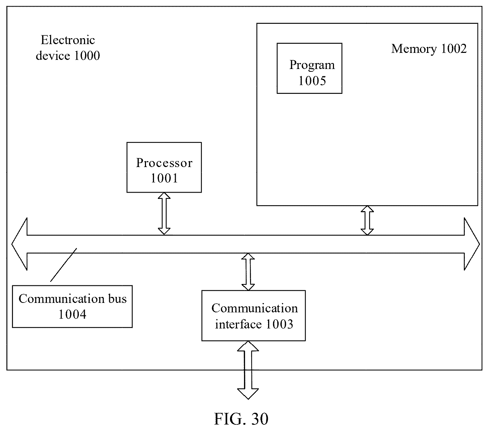

FIG. 30 is a schematic diagram illustrating an electronic device provided by an embodiment of the present disclosure. In some embodiments, the electronic device includes one or more processors and one or more memory. The memory is configured to store one or more programs. When the one or more programs are executed by the one or more processors, the one or more processors implement the security control method in the above embodiment.

As shown in FIG. 30, the electronic device 1000 includes: a processor 1001 and a memory 1002. Illustratively, the electronic device 1000 may also include: a communication interface 1003 and a communication bus 1004.

The processor 1001, the memory 1002 and the communication interface 1003 communicate with each other via the communication bus 1004. The communication interface 1003 is configured to communicate with other devices such as a client or other server network elements.

In some embodiments, the processor 1001 is configured to execute the program 1005, and specifically may execute the relevant steps in the embodiments of the above security control method. Specifically, the program 1005 may include program codes, and the program codes include computer executable instructions.

Illustratively, the processor 1001 may be a central processing unit (CPU), or an application specific integrated circuit (ASIC), or one or more integrated circuits configured to implement the embodiments of the present disclosure. The electronic device 1000 may include one or more processors, which may be processors with the same type, such as one or more CPUs; or processors with different types, such as one or more CPUs and one or more ASICs.

In some embodiments, the memory 1002 is configured to store the program 1005. The memory 1002 may include a high-speed RAM memory, and may also include a non-volatile memory (NVM), such as at least one disk memory.

The program 1005 may be specifically called by the processor 1001 to enable the electronic device 1000 to perform operations of the security control method.

Embodiments of the present disclosure provide a computer-readable storage medium storing at least one executable instruction. When the executable instruction is executed on the electronic device 1000, the electronic device 1000 executes the security control method in the above embodiment.

The executable instructions may be specifically configured to enable the electronic device 1000 to perform operations of the security control method.

For example, the computer readable storage medium may be a read-only memory (ROM), a random access memory (RAM), a compact disc read-only memory (CD-ROM), a magnetic tape, a floppy disk, an optical data storage device, etc.

In some embodiments, embodiments of the present disclosure provide a computer program product. The computer program product includes a computer program stored on a non-transitory computer-readable storage medium, and the computer program includes program instructions which, when executed by a computer, cause the computer to implement the security control method described in any of the above embodiments.

In some embodiments, embodiments of the present disclosure further provide a computer program. When the computer program is executed by a processor, the security control method described in any of the above embodiments may be implemented.

For the beneficial effects that may be achieved by the electronic device, the computer-readable storage medium, the computer program product and the computer program provided by the embodiments of the present disclosure, reference may be made to the beneficial effects of the security control method provided above, and details are not be repeated here.

It should be noted that relationship terms such as first and second are only used herein to distinguish an entity or operation from another entity or operation, and it is not necessarily required or implied that there are any actual relationship or order of this kind between those entities and operations. Moreover, terms such as "comprise", "comprising" and any other variants are intended to cover non-exclusive contains, so that the processes, methods, articles or devices including a series of elements not only include those elements but also include other elements that are not listed definitely, or also include the elements inherent in the processes, methods, articles or devices. In the case of no more restrictions, the elements defined by the statement "comprise one ..." do not exclude that other same elements also exist in the processes, methods, articles or devices including the elements.

Each embodiment in the specification is described in a relevant manner. For same or similar parts in the embodiments, reference may be made to each other. What is different from other embodiments is emphasized in each embodiment. In particular, for the apparatus embodiment, because it is basically similar to the method embodiment, the apparatus embodiment is described simply, and for a relevant part thereof, reference may be made to part of the description of the method embodiment.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment.

As to the specification, "the computer readable medium" may be any device adaptive for including, storing, communicating, propagating or transferring programs to be used by or in combination with the instruction execution system, device or equipment.

More specific examples of the computer readable medium comprise but are not limited to: an electronic connection (an electronic device) with one or more wires, a portable computer enclosure (a magnetic device), a random-access memory (RAM), a read-only memory (ROM), an erasable programmable read-only memory (EPROM or a flash memory), an optical fiber device and a portable compact disk read-only memory (CDROM).

In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories. It should be understood that each part of the present disclosure may be realized by the hardware, software, firmware or their combination.

In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

The above implementations of the present disclosure do not limit the scope of protection of the present disclosure.

## Claims

1. A security control method, applied to a security transmission system comprising a movable device and a security control system, and the method comprising:
when a network between the movable device and the security control system is disconnected, stopping operation of an actuating mechanism in the movable device under control of a security control mechanism in the movable device; and
when the network between the movable device and the security control system is restored, resuming the operation of the actuating mechanism under the control of the security control mechanism in response to determining that a resuming operation condition is satisfied, wherein satisfying the resuming operation condition comprises the security control mechanism acquiring a reset signal and/or a duration from the network being disconnected to the network being restored being less than a first preset duration.

2. The method according to claim 1, wherein stopping the operation of the actuating mechanism in the movable device under the control of the security control mechanism in the movable device comprises:
outputting, by the security control mechanism, a stop operation instruction to the actuating mechanism; and
stopping the operation of the actuating mechanism according to the stop operation instruction.

3. The method according to claim 2, wherein the actuating mechanism comprises a delay module, a control module, a driver module and a motor, and stopping the operation of the actuating mechanism according to the stop operation instruction comprises:
outputting, by the control module, a deceleration instruction to the driver module according to the stop operation instruction output by the security control unit;
driving, by the driver module, the motor to decelerate according to the deceleration instruction;
starting timing of the delay module according to the stop operation instruction output by the security control unit;
in a case where a timing duration of the delay module reaches a second preset duration, outputting, by the delay module, a power-off instruction to the driver module, wherein the first preset duration is less than or equal to the second preset duration;
driving, by the driver module, the motor to power off and brake and outputting fault information according to the power-off instruction.

4. The method according to claim 3, further comprising:
when the network between the movable device and the security control system is restored, acquiring a security control signal by the security control mechanism, wherein the security control signal comprises the reset signal and/or an emergency stop signal;
determining that the resuming operation condition is satisfied in response to the security control signal being the reset signal, wherein the reset signal is a reset signal sent by the security control system, or the reset signal is a reset signal generated by the security control mechanism;
wherein resuming the operation of the actuating mechanism under the control of the security control mechanism comprises: resuming the operation of the actuating mechanism under the control of the security control mechanism based on the reset signal.

5. The method according to claim 4, wherein resuming the operation of the actuating mechanism under the control of the security control mechanism based on the reset signal comprises:
outputting a first level, and outputting an operation resumption instruction to the actuating mechanism, by the security control mechanism based on the reset signal acquired; and
resuming the operation of the actuating mechanism according to the operation resumption instruction.

6. The method according to claim 4, further comprising:
continuing to stop the operation of the actuating mechanism under the control of the security control mechanism in response to the security control signal being the emergency stop signal;
after the network between the movable device and the security control system is restored, in response to the security control mechanism acquiring the reset signal, resuming the operation of the actuating mechanism under the control of the security control mechanism based on the reset signal.

7. The method according to claim 6, wherein in response to the security control signal being the emergency stop signal, continuing to stop the operation of the actuating mechanism under the control of the security control mechanism comprises:
when the network between the movable device and the security control system is restored, outputting a second level by the security control mechanism based on the emergency stop signal, and continuing to stop the operation of the actuating mechanism under the control of the security control mechanism.

8. The method according to claim 7, wherein after the network between the movable device and the security control system is restored, in response to the security control mechanism acquiring the reset signal, resuming the operation of the actuating mechanism under the control of the security control mechanism based on the reset signal comprises:
after the network between the movable device and the security control system is restored, changing an output of the security control mechanism from the second level to a first level, and outputting an operation resumption instruction to the actuating mechanism, by the security control mechanism based on the reset signal acquired;
resuming the operation of the actuating mechanism according to the operation resumption instruction.

9. The method according to claim 8, wherein resuming the operation of the actuating mechanism according to the operation resumption instruction comprises:
outputting, by the control module, a power-on instruction to the driver module according to the operation resumption instruction output by the security control mechanism; and
clearing the fault information and driving the motor to power on and resume operation by the driver module according to the power-on instruction.

10. The method according to claim 2, wherein the duration from the network being disconnected to the network being restored is less than the first preset duration, the actuating mechanism comprises a delay module, a control module, a driver module and a motor, and stopping the operation of the actuating mechanism according to the stop operation instruction comprises:
outputting, by the control module, a deceleration instruction to the driver module according to the stop operation instruction output by the security control mechanism;
driving, by the driver module, the motor to decelerate according to the deceleration instruction; and
starting timing of the delay module according to the stop operation instruction output by the security control mechanism.

11. The method according to claim 10, wherein resuming the operation of the actuating mechanism under the control of the security control mechanism comprises:
outputting, by the security control mechanism, a network restoring instruction to the delay module and the control module;
in response to a timing duration of the delay module from a start of timing to receipt of the network restoring instruction not reaching a second preset duration, stopping the timing of the delay module according to the network restoring instruction, wherein the first preset duration is less than or equal to the second preset duration;
outputting, by the control module, an acceleration instruction to the driver module according to the network restoring instruction;
driving, by the driver module, the motor to resume operation according to the acceleration instruction.

12. The method according to any one of claims 1 to 11, wherein the security control system comprises a plurality of security control units, each of the plurality of security control units is configured to control one group of movable devices, the plurality of security control units comprise a first security control unit and at least one second security control unit, the method further comprises:
generating, by the first security control unit, a first security control signal based on a first security trigger signal sent by a first security trigger device;
sending, by the first security control unit, the first security control signal to each of the at least one second security control unit;
sending, by the first security control unit, a target security control signal to each of first movable devices in a first movable device group corresponding to the first security control unit based on the first security control signal;
sending, by each second security control unit, the target security control signal to each of second movable devices in a second movable device group corresponding to the each second security control unit based on the first security control signal.

13. The method according to claim 12, wherein the target security control signal is the first security control signal, and generating, by the first security control unit, the first security control signal based on the first security trigger signal sent by the first security trigger device comprises:
in a case of determining that a security event is triggered, generating, by the first security control unit, the first security control signal based on the first security trigger signal.

14. The method according to claim 13, wherein the security control system further comprises a wireless transmitter, the wireless transmitter being coupled to the plurality of security control units, and sending, by the first security control unit, the target security control signal to each of the first movable devices in the first movable device group corresponding to the first security control unit based on the first security control signal comprises:
sending, by the first security control unit, the first security control signal to each of the first movable devices in the first movable device group corresponding to the first security control unit via the wireless transmitter.

15. The method according to claim 14, wherein sending, by the first security control unit, the first security control signal to each of the at least one second security control unit comprises:
sending, by the first security control unit, the first security control signal to each of the at least one second security control unit via the wireless transmitter;
wherein sending, by the each second security control unit, the target security control signal to each of the second movable devices in the second movable device group corresponding to the each second security control unit based on the first security control signal comprises:
receiving, by the each second security control unit, the first security control signal via the wireless transmitter, and sending, by the each second security control unit, the first security control signal to each of the second movable devices in the second movable device group corresponding to the each second security control unit via the wireless transmitter.

16. The method according to claim 14, wherein the security control system further comprises a switch, coupled to the plurality of security control units, and sending, by the first security control unit, the first security control signal to each of the at least one second security control unit comprises:
sending, by the first security control unit, the target security control signal to each of the at least one second security control unit via the switch;
wherein sending, by the each second security control unit, the target security control signal to each of the second movable devices in the second movable device group corresponding to the each second security control unit based on the first security control signal comprises:
receiving, by the each second security control unit, the first security control signal via the switch, and sending, by the each second security control unit, the first security control signal to each of the second movable devices in the second movable device group corresponding to the each second security control unit via the wireless transmitter.

17. The method according to claim 16, wherein first interfaces of the plurality of security control units are coupled to the wireless transmitter respectively, and second interfaces of the plurality of security control units are coupled to the switch respectively, and sending, by the first security control unit, the target security control signal to each of the first movable devices in the first movable device group corresponding to the first security control unit based on the first security control signal comprises:
sending, by the first security control unit, the first security control signal to the wireless transmitter via a first interface of the first security control unit, to enable the wireless transmitter to send the first security control signal to each of the first movable devices in the first movable device group corresponding to the first security control unit;
wherein sending, by the first security control unit, the first security control signal to each of the at least one second security control unit comprises:
sending, by the first security control unit, the first security control signal to the switch via a second interface of the first security control unit, to enable the switch to send the first security control signal to each of the at least one second security control unit;
wherein sending, by the each second security control unit, the target security control signal to each of the second movable devices in the second movable device group corresponding to the each second security control unit based on the first security control signal comprises:
receiving, by the each second security control unit, the first security control signal via the switch and a second interface of the each second security control unit, and sending, by the each second security control unit, the first security control signal to the wireless transmitter via a first interface of the each second security control unit, to enable the wireless transmitter to send the first security control signal to each of the second movable devices in the second movable device group corresponding to the each second security control unit.

18. The method according to claim 13, wherein the security control system further comprise a wireless transmitter, each of the at least one second security control unit is coupled to the wireless transmitter via the first security control unit, and sending, by the first security control unit, the target security control signal to each of the first movable devices in the first movable device group corresponding to the first security control unit based on the first security control signal comprises:
sending, by the first security control unit, the first security control signal to each of the first movable devices in the first movable device group corresponding to the first security control unit via the wireless transmitter;
wherein sending, by the each second security control unit, the target security control signal to each of the second movable devices in the second movable device group corresponding to the each second security control unit based on the first security control signal comprises:
receiving, by the each second security control unit, the first security control signal sent by the first security control unit, and sending, by the each second security control unit, the first security control signal to each of the second movable devices in the second movable device group corresponding to the each second security control unit via the first security control unit and the wireless transmitter.

19. The method according to claim 18, wherein a first interface of the first security control unit is coupled to the wireless transmitter, and a second interface of the first security control unit is coupled to a first interface of each of the at least one second security control unit, sending, by the first security control unit, the target security control signal to each of the first movable devices in the first movable device group corresponding to the first security control unit based on the first security control signal comprises:
sending, by the first security control unit, the first security control signal to each of the first movable devices in the first movable device group corresponding to the first security control unit via the first interface of the first security control unit and the wireless transmitter;
wherein sending, by the first security control unit, the first security control signal to each of the at least one second security control unit comprises:
sending, by the first security control unit, the first security control signal to each of the at least one second security control unit via the second interface of the first security control unit;
wherein sending, by the each second security control unit, the target security control signal to each of the second movable devices in the second movable device group corresponding to the each second security control unit based on the first security control signal comprises:
receiving, by the each second security control unit, the first security control signal via the first interface of the each second security control unit, and sending, by the each second security control unit, the first security control signal to each of the second movable devices in the second movable device group corresponding to the each second security control unit via the first security control unit and the wireless transmitter.

20. The method according to claim 19, wherein the plurality of security control units further comprises a third security control unit, a first interface of the third security control unit is coupled to a second interface of each of the at least one second security control unit, and the method further comprises:
sending, by the each second security control unit, the first security control signal to the third security control unit via the second interface of the each second security control unit; and
receiving, by the third security control unit, the first security control signal via the first interface of the third security control unit, and sending, by the third security control unit, the first security control signal to each of third movable devices in a third movable device group corresponding to the third security control unit via the second security control unit, the first security control unit and the wireless transmitter.

21. The method according to claim 13, wherein the security control system further comprises a wireless transmitter, the first security control unit is coupled to each of the at least one second security control unit, and the first security control unit and the at least one second security control unit are coupled to the wireless transmitter respectively, and sending, by the first security control unit, the first security control signal to each of the at least one second security control unit comprises:
sending, by the first security control unit, the first security control signal to each of the first movable devices in the first movable device group corresponding to the first security control unit via the wireless transmitter;
wherein sending, by the each second security control unit, the target security control signal to each of the second movable devices in the second movable device group corresponding to the each second security control unit based on the first security control signal comprises:
receiving, by the each second security control unit, the first security control signal sent by the first security control unit, and sending, by the each second security control unit, the first security control signal to each of the second movable devices in the second movable device group corresponding to the each second security control unit via the wireless transmitter.

22. The method according to claim 21, wherein a first interface of the first security control unit is coupled to the wireless transmitter, and a second interface of the first security control unit is coupled to a first interface of each of the at least one second security control unit, and a second interface of each of the at least one second security control unit is coupled to the wireless transmitter;
wherein sending, by the first security control unit, the target security control signal to each of the first movable devices in the first movable device group corresponding to the first security control unit based on the first security control signal comprises:
sending, by the first security control unit, the first security control signal to each of the first movable devices in the first movable device group corresponding to the first security control unit via the first interface of the first security control unit and the wireless transmitter;
wherein sending, by the first security control unit, the first security control signal to each of the at least one second security control unit comprises:
sending, by the first security control unit, the first security control signal to each of the at least one second security control unit via the second interface of the first security control unit;
wherein sending, by the each second security control unit, the target security control signal to each of the second movable devices in the second movable device group corresponding to the each second security control unit based on the first security control signal comprises:
receiving, by the each second security control unit, the first security control signal via the first interface of the each second security control unit, and sending, by the each second security control unit, the first security control signal to each of the second movable devices in the second movable device group corresponding to the each second security control unit via the second interface of the each second security control unit and the wireless transmitter.

23. The method according to claim 22, wherein the plurality of security control units further comprise a third security control unit, each of the at least one second security control unit further comprises a third interface, the third interface of the second security control unit is coupled to a first interface of the third security control unit, and the second interface of the third security control unit is coupled to the wireless transmitter, the method further comprises:
sending, by the each second security control unit, the first security control signal to the third security control unit via the third interface of the each second security control unit; and
receiving, by the third security control unit, the target security control signal via the first interface of the third security control unit, and sending, by the third security control unit, the first security control signal to each of third movable devices in a third movable device group corresponding to the third security control unit via the second interface of the third security control unit and the wireless transmitter.

24. The method according to claim 13, wherein the security transmission system further comprises at least one security trigger device; the at least one security trigger device comprises a first security trigger device coupled to the first security control unit, and the method further comprises:
when detecting a trigger operation, generating and sending, by the first security trigger device, the first security trigger signal to the first security control unit;
receiving, by the first security control unit, the first security trigger signal, and determining that the security event is triggered according to the first security trigger signal, wherein the security event comprises an emergency stop event and/or the reset event.

25. The method according to claim 12, wherein each of the plurality of security control units is configured to receive a security trigger signal sent by each security trigger device in a security trigger device group corresponding to each security control unit, the first security control unit is any security control unit among the plurality of security control units, and the at least one second security control unit is a security control unit among the plurality of security control units except the first security control unit, the method further comprises:
generating, by each second security control unit, a second security control signal according to a second security trigger signal sent by each of second security trigger devices in a second security trigger device group corresponding to the each second security control unit, and sending, by the each second security control unit, the second security control signal to the first security control unit;
wherein generating, by the first security control unit, the first security control signal based on the first security trigger signal sent by the first security trigger device comprises:
generating, by the first security control unit, the first security control signal based on the first security trigger signal sent by each of first security trigger devices in a first security trigger device group corresponding to the first security control unit.

26. The method according to claim 25, wherein sending, by the first security control unit, the target security control signal to each of the first movable devices in the first movable device group corresponding to the first security control unit based on the first security control signal comprises:
generating, by the first security control unit, the target security control signal based on the first security control signal and at least one second security control signal, and sending, by the first security control unit, the target security control signal to each of the first movable devices in the first movable device group corresponding to the first security control unit to control emergency stop or reset of each of the first movable devices in the first movable device group corresponding to the first security control unit.

27. The method according to claim 26, wherein the first security trigger signal comprises a first emergency stop signal and a first reset signal, and generating, by the first security control unit, the first security control signal based on the first security trigger signal sent by each of the first security trigger devices in the first security trigger device group corresponding to the first security control unit comprises:
generating, by the first security control unit, a first emergency stop control signal by performing a first logic operation on first emergency stop signals sent by the first security trigger devices in the first security trigger device group;
generating, by the first security control unit, a first reset control signal by performing a second logic operation on first reset signals sent by the first security trigger devices in the first security trigger device group, wherein the first security control signal comprises the first emergency stop control signal and the first reset control signal.

28. The method according to claim 27, wherein generating, by the first security control unit, the target security control signal based on the first security control signal and the at least one second security control signal comprises:
generating, by the first security control unit, a first system control signal according to the first security control signal and the at least one second security control signal, and sending, by the first security control unit, the first system control signal to the at least one second security control unit, wherein, when an emergency stop control signal is present in the first security control signal and/or the at least one second security control signal, the first system control signal is a system emergency stop signal; and
generating, by the first security control unit, the target security control signal based on the first system control signal.

29. The method according to claim 28, further comprising:
receiving, by the first security control unit, a second system control signal and a second connection status signal sent by each of the at least one second security control unit;
wherein generating, by the first security control unit, the target security control signal based on the first system control signal comprises:
generating, by the first security control unit, the target security control signal based on the first system control signal, a first connection status signal corresponding to the first security control unit, and the second system control signal and the second connection status signal corresponding to each of the at least one second security control unit.

30. The method according to claim 29, wherein generating, by the first security control unit, the target security control signal based on the first system control signal, the first connection status signal corresponding to the first security control unit, and the second system control signal and the second connection status signal corresponding to each of the at least one second security control unit comprises:
in response to presence of the system emergency stop signal in the first system control signal and/or the at least one second system control signal, and/or presence of a signal in an abnormal connection status in the first connection status signal and/or the at least one second connection status signal, generating, by the first security control unit, an emergency stop control signal for controlling emergency stop of each of the first movable devices in the first movable device group; wherein the target security control signal comprises the emergency stop control signal.

31. The method according to claim 25, wherein each of the plurality of security control units comprises a first interface and a second interface, the first interface of each security control unit is configured to couple with each of the security trigger devices in the security trigger device group corresponding to the each security control unit via a first switch network, the second interface of each security control unit is configured to couple with each of movable devices in a movable device group corresponding to the each security control unit via a second switch network, and the method further comprises:
establishing, by the first security control unit, a secure connection with each of first security trigger devices in a first security trigger device group via the first switch network, and establishing, by the first security control unit, a secure connection with each of the first movable devices in the first movable device group via the second switch network.

32. The method according to claim 31, wherein the plurality of security control units are coupled in parallel, and each of the security control units accesses to the first switch network via the first interface and accesses to the second switch network via the second interface.

33. The method according to claim 32, wherein the first switch network comprises at least one first switch, and the second switch network comprises at least one second switch, a numerical count of the first switches is related to a numerical count of the plurality of security control units and a numerical count of the plurality of security trigger devices, and a numerical count of the second switches is related to the numerical count of the plurality of security control units.

34. The method according to claim 33, further comprising:
receiving, by the first security control unit, the first security trigger signal sent by each of the first security trigger devices in the first security trigger device group via the first interface of the first security control unit and the corresponding first switch;
sending, by the first security control unit, the first security control signal to each of the at least one second security control unit comprises:
sending, by the first security control unit, the first security control signal to each of the at least one second security control unit via a second interface of the first security control unit and the corresponding second switch, and sending, by the first security control unit, the target security control signal to each of the first movable devices in the first movable device group to control emergency stop or reset of each of the first movable devices.

35. The method according to claim 25, wherein a sum of a numerical count of first security trigger devices in a first security trigger device group and a numerical count of the first movable devices in the first movable device group is less than or equal to a maximum numerical count of connectable nodes of the first security control unit.

36. The method of claim 25, wherein the security trigger device comprises a workstation electrical cabinet.

37. A security transmission system, comprising a security control system and a movable device, wherein the movable device comprises a security control mechanism and an actuating mechanism, and the security control mechanism is configured to:
when a network between the movable device and the security control system is disconnected, control the actuating mechanism to stop operation; and
when the network between the movable device and the security control system is restored, control the actuating mechanism to resume the operation in response to determining that a resuming operation condition is satisfied, wherein satisfying the resuming operation condition comprises the security control mechanism acquiring a reset signal and/or a duration from the network being disconnected to the network being restored being less than a first preset duration.

38. The security transmission system according to claim 37, wherein the security control system comprises a plurality of security control units, each of the plurality of security control units is configured to control one group of movable devices, the plurality of security control units comprise a first security control unit and at least one second security control unit, and the first security control unit is configured to:
generate a first security control signal based on a first security trigger signal sent by a first security trigger device, and send the first security control signal to each of the at least one second security control unit;
send a target security control signal to each of first movable devices in a first movable device group corresponding to the first security control unit based on the first security control signal;
each second security control unit is configured to send the target security control signal to each of second movable devices in a second movable device group corresponding to the each second security control unit based on the first security control signal.

39. The security transmission system according to claim 38, wherein the target security control signal is the first security control signal, and the first security control unit is configured to:
in a case of determining that a security event is triggered, generate the first security control signal based on the first security trigger signal, and send the first security control signal to each of the at least one second security control unit.

40. The security transmission system according to claim 37, wherein each of the plurality of security control units is configured to receive a security trigger signal sent by each security trigger device in a security trigger device group corresponding to each security control unit, the first security control unit is any security control unit among the plurality of security control units, and the at least one second security control unit is a security control unit among the plurality of security control units except the first security control unit;
the first security control unit is configured to generate the first security control signal based on the first security trigger signal sent by each of first security trigger devices in a first security trigger device group corresponding to the first security control unit;
each second security control unit is configured to generate a second security control signal according to a second security trigger signal sent by each second security trigger device in a second security trigger device group corresponding to the each second security control unit, and send the second security control signal to the first security control unit.

41. The security transmission system according to claim 40, wherein the first security control unit is configured to:
generate the target security control signal based on the first security control signal and at least one second security control signal, and send the target security control signal to each of the first movable devices in the first movable device group corresponding to the first security control unit to control emergency stop or reset of each of the first movable devices in the first movable device group corresponding to the first security control unit.

42. A movable device comprising a security control mechanism and an actuating mechanism, wherein the security control mechanism is configured to:
when a network between the movable device and the security control system is disconnected, control the actuating mechanism to stop operation;
when the network between the movable device and the security control system is restored, control the actuating mechanism to resume the operation in response to determining that a resuming operation condition is satisfied, wherein satisfying the resuming operation condition comprises the security control mechanism acquiring a reset signal and/or a duration from the network being disconnected to the network being restored being less than a first preset duration.

43. An electronic device, comprising:
one or more processors; and
a memory configured to store one or more programs;
wherein, when the one or more programs are executed by the one or more processors, the one or more processors are configured to implement the security control method according to any one of claims 1 to 36.

44. A computer-readable storage medium for storing computer instructions which, when executed by a processor, cause the processor to implement the security control method according to any one of claims 1 to 36.

45. A computer program product comprising a computer program which, when executed by a processor, causes the processor to implement the security control method according to any one of claims 1 to 36.
